(19) Europäisches Patentamt / European Patent Office / Office européen des brevets

(11) **EP 3 105 181 B1**

(12) **FASCICULE DE BREVET EUROPEEN**

(45) Date de publication et mention de la délivrance du brevet:
**25.05.2022 Bulletin 2022/21**

(21) Numéro de dépôt: **15703998.3**

(22) Date de dépôt: **12.02.2015**

(51) Classification Internationale des Brevets (IPC):
**C01B 33/193** *(2006.01)*      **B29D 30/00** *(2006.01)*
**C08K 3/06** *(2006.01)*      **B60C 1/00** *(2006.01)*

(52) Classification Coopérative des Brevets (CPC):
**C01B 33/193; B60C 1/0016;** C01P 2006/12;
C01P 2006/14; C01P 2006/90

(86) Numéro de dépôt international:
**PCT/EP2015/052921**

(87) Numéro de publication internationale:
**WO 2015/121333 (20.08.2015 Gazette 2015/33)**

(54) **NOUVEAU PROCEDE DE PREPARATION DE SILICES PRECIPITEES, NOUVELLES SILICES PRECIPITEES ET LEURS UTILISATIONS, NOTAMMENT POUR LE RENFORCEMENT DE POLYMERES**

NEUARTIGES VERFAHREN ZUR HERSTELLUNG VON FÄLLUNGSKIESELSÄUREN, NEUARTIGE FÄLLUNGSKIESELSÄUREN UND VERWENDUNGEN DAVON, INSBESONDERE ZUR VERSTÄRKUNG VON POLYMEREN

NOVEL METHOD FOR PREPARING PRECIPITATED SILICAS, NOVEL PRECIPITATED SILICAS AND THE USES OF SAME, IN PARTICULAR FOR REINFORCING POLYMERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.02.2014 FR 1400415**

(43) Date de publication de la demande:
**21.12.2016 Bulletin 2016/51**

(73) Titulaire: **Rhodia Operations**
**93300 Aubervilliers (FR)**

(72) Inventeurs:
• **BOIVIN, Cédric**
  **F-69380 Chasselay (FR)**
• **GUY, Laurent**
  **F-69140 Rillieux-la-Pape (FR)**
• **PERIN, Eric**
  **F-69400 Villefranche sur Saône (FR)**
• **LAMIRI, Kilani**
  **F-69210 L' Arbresle (FR)**

(74) Mandataire: **Ferri, Isabella**
**Solvay S.A.**
**Viale Lombardia, 20**
**20021 Bollate (MI) (IT)**

(56) Documents cités:
**EP-A1- 1 674 520      WO-A1-2013/092745**
**FR-A1- 2 886 285      US-A- 5 800 608**

**Description**

La présente invention concerne un nouveau procédé de préparation de silice précipitée, de nouvelles silices précipitées et leurs applications, telles que le renforcement des polymères.

Il est connu d'employer des charges blanches renforçantes dans les polymères, en particulier les élastomères, comme par exemple de la silice précipitée.

Le but de la présente invention est de proposer notamment une charge alternative pour les compositions de polymères leur procurant de manière avantageuse une réduction de leur viscosité et une amélioration de leurs propriétés dynamiques tout en conservant leurs propriétés mécaniques. Elle permet ainsi de manière avantageuse une amélioration du compromis hystérèse/renforcement.

La présente invention propose tout d'abord un nouveau procédé de préparation de silice précipitée mettant en œuvre, au cours de ou après l'opération de délitage, au moins un acide polycarboxylique.

L'utilisation d'acide carboxylique lors de la préparation de silice précipitée à faible reprise en eau, utilisable notamment comme charge renforçante dans les matrices silicones, est décrit dans FR2886285A1. FR2886285A1 ne décrit pas une silice selon la revendication 1 ni le procédé pour sa préparation.

De manière générale, la préparation de silice précipitée s'effectue par réaction de précipitation d'un silicate, tel qu'un silicate de métal alcalin (silicate de sodium par exemple), avec un agent acidifiant (acide sulfurique par exemple), puis séparation par filtration, avec obtention d'un gâteau de filtration, de la silice précipitée obtenue, ensuite délitage dudit gâteau de filtration et enfin séchage (généralement par atomisation). Le mode de précipitation de la silice peut être quelconque : notamment, addition d'agent acidifiant sur un pied de cuve de silicate, addition simultanée totale ou partielle d'agent acidifiant et de silicate sur un pied de cuve d'eau ou de silicate.

L'un des objets de l'invention est un nouveau procédé de préparation d'une silice précipitée du type comprenant la réaction de précipitation entre un silicate et un agent acidifiant ce par quoi l'on obtient une suspension de silice précipitée, puis la séparation et le séchage de cette suspension, caractérisé en ce qu'il comprend les étapes successives suivantes :

- on réalise la réaction de précipitation de la manière suivante :

  (i) on forme un pied de cuve aqueux présentant un pH compris entre 2,0 et 5,0,
  (ii) on ajoute audit pied de cuve, simultanément, du silicate et de l'agent acidifiant, de telle manière que le pH du milieu réactionnel soit maintenu entre 2,0 et 5,0,
  (iii) on arrête l'addition de l'agent acidifiant tout en continuant l'addition de silicate dans le milieu réactionnel jusqu'à l'obtention d'une valeur du pH du milieu réactionnel comprise entre 7,0 et 10,0,
  (iv) on ajoute au milieu réactionnel, simultanément, du silicate et de l'agent acidifiant, de telle manière que le pH du milieu réactionnel soit maintenu entre 7,0 et 10,0,
  (v) on arrête l'addition du silicate tout en continuant l'addition de l'agent acidifiant dans le milieu réactionnel jusqu'à l'obtention d'une valeur du pH du milieu réactionnel inférieure à 6,0,

- on filtre la suspension de silice obtenue,
- on soumet le gâteau de filtration obtenu à l'issue de la filtration à une opération de délitage,

ledit procédé étant caractérisé en ce qu'on ajoute au gâteau de filtration, soit au cours de l'opération de délitage, soit après l'opération de délitage et avant l'étape de séchage, au moins un acide polycarboxylique (par exemple un mélange d'acides polycarboxyliques).

Un procédé comprenant les étapes (i) à (v) est décrit dans WO2013/092745 A1.

Selon l'invention, le gâteau de filtration est soumis à une opération de délitage pendant laquelle ou après laquelle est introduit au moins un acide polycarboxylique. Le mélange alors obtenu (suspension de silice précipitée) est ensuite séché (généralement par atomisation).

L'opération de délitage est une opération de fluidification ou liquéfaction, dans laquelle le gâteau de filtration est rendu liquide, la silice précipitée se retrouvant en suspension.

Dans une première variante de l'invention, cette opération de délitage est réalisée en soumettant le gâteau de filtration à une action chimique par addition d'au moins un acide polycarboxylique, de préférence couplée à une action mécanique (par exemple par passage dans un bac agité en continu ou dans un broyeur de type colloïdal) qui induit habituellement une réduction granulométrique de la silice en suspension. La suspension (en particulier aqueuse) obtenue après délitage présente une viscosité relativement faible.

Dans une seconde variante, cette opération de délitage est réalisée en soumettant le gâteau de filtration à une action mécanique (par exemple par passage dans un bac agité en continu ou dans un broyeur de type colloïdal) qui induit habituellement une réduction granulométrique de la silice en suspension.

Dans cette seconde variante, on ajoute au moins un acide polycarboxylique après l'opération de délitage, c'est-à-dire au gâteau de silice délité.

Le gâteau de filtration devant être soumis à l'opération de délitage peut être composé du mélange de plusieurs gâteaux de filtration, chacun desdits gâteaux étant obtenu par filtration d'une partie de la suspension de silice obtenue à l'issue de l'étape (v) (cette suspension étant, préalablement à la filtration, fractionnée en plusieurs parties).

Selon l'invention, on entend par « acide polycarboxylique » des acides polycarboxyliques comprenant au moins deux groupes fonctionnels acide carboxylique. L'expression « groupe fonctionnel acide carboxylique » est prise ici dans son sens habituel et se réfère au groupe fonctionnel -COOH.

L'acide polycarboxylique employé selon l'invention peut avoir deux, trois, quatre ou plus de quatre groupes fonctionnels acide carboxylique.

Selon l'invention, l'acide polycarboxylique est de préférence choisi parmi les acides dicarboxyliques et les acides tricarboxyliques.

Selon l'invention, l'acide polycarboxylique employé peut être un acide polycarboxylique linéaire ou ramifié, saturé ou insaturé, aliphatique ayant de 2 à 20 atomes de carbone ou aromatique. L'acide polycarboxylique peut éventuellement comprendre des groupes hydroxyles et/ou des atomes d'halogène. L'acide polycarboxylique aliphatique peut éventuellement comprendre des hétéroatomes sur la chaîne principale, par exemple N, S. Généralement, l'acide polycarboxylique employé selon l'invention est choisi dans le groupe constitué par les acides polycarboxyliques aliphatiques linéaires ou ramifiés, saturés ou insaturés ayant de 2 à 16 atomes de carbone et les acides polycarboxyliques aromatiques.

Parmi les acides polycarboxyliques aliphatiques, on peut mentionner les acides polycarboxyliques linéaires, saturés ou insaturés, ayant de 2 à 14 atomes de carbone, de préférence de 2 à 12 atomes de carbone. L'acide polycarboxylique employé peut avoir 2, 3, 4, 5, 6, 7, 8, 9, 10, 11 ou 12 atomes de carbone. De manière avantageuse, l'acide polycarboxylique employé peut avoir 4, 5, 6, 7, 8, 9 ou 10 atomes de carbone, de préférence 4, 5, 6, 7 ou 8 atomes de carbone. Par exemple, l'acide polycarboxylique employé peut avoir 4, 5 ou 6 atomes de carbone.

Notamment, on peut citer comme exemples non limitatifs d'acides polycarboxyliques aliphatiques linéaires utilisés dans l'invention les acides choisis dans le groupe constitué de l'acide oxalique, l'acide malonique, l'acide tricarballylique, l'acide succinique, l'acide glutarique, l'acide adipique, l'acide pimélique, l'acide subérique, l'acide azélaïque, l'acide sébacique.

Parmi les acides polycarboxyliques ramifiés, on peut citer l'acide méthylsuccinique, l'acide éthylsuccinique, l'acide oxalosuccinique, l'acide méthyladipique, l'acide méthylglutarique, l'acide diméthylglutarique. Par acide méthylglutarique on entend à la fois l'acide 2-méthylglutarique et l'acide 3-méthylglutarique ainsi que le mélange de ces deux isomères en toutes proportions. L'expression « acide 2-méthylglutarique » est utilisée pour indiquer aussi bien les formes (S) et (R) du composé que le mélange racémique.

Parmi les acides polycarboxyliques insaturés, on peut citer l'acide maléique, l'acide fumarique, l'acide itaconique, l'acide muconique, l'acide aconitique, l'acide traumatique et l'acide glutaconique.

Parmi les acides polycarboxyliques comprenant des groupes hydroxyles, on peut citer l'acide malique, l'acide citrique, l'acide isocitrique et l'acide tartarique.

Parmi les acides polycarboxyliques aromatiques, on peut mentionner les acides phtaliques, à savoir l'acide phtalique, l'acide orthophtalique, l'acide isophtalique, l'acide trimésique et l'acide trimellitique.

De préférence, l'acide polycarboxylique employé dans le procédé selon l'invention est choisi dans le groupe constitué par l'acide oxalique, l'acide malonique, l'acide tricarballylique, l'acide succinique, l'acide glutarique, l'acide adipique, l'acide pimélique, l'acide subérique, l'acide azélaïque, l'acide sébacique, l'acide méthylsuccinique, l'acide éthylsuccinique, l'acide méthyladipique, l'acide méthylglutarique, l'acide diméthylglutarique, l'acide malique, l'acide citrique, l'acide isocitrique, l'acide tartarique.

De préférence, les acides dicarboxyliques et tricarboxyliques sont choisis parmi l'acide adipique, l'acide succinique, l'acide éthylsuccinique, l'acide glutarique, l'acide méthylglutarique, l'acide oxalique, l'acide citrique.

L'acide polycarboxylique peut également être choisi dans le groupe constitué par l'acide oxalique, l'acide malonique, l'acide tricarballylique, l'acide succinique, l'acide glutarique, l'acide adipique, l'acide pimélique, l'acide subérique, l'acide azélaïque, l'acide sébacique, l'acide méthylsuccinique, l'acide éthylsuccinique, l'acide méthyladipique, l'acide méthylglutarique, l'acide diméthylglutarique, l'acide malique, l'acide citrique, l'acide isocitrique, l'acide tartarique. De préférence, l'acide polycarboxylique peut être choisi dans le groupe constitué par l'acide oxalique, l'acide malonique, l'acide succinique, l'acide glutarique, l'acide adipique, l'acide pimélique, l'acide subérique, l'acide azélaïque, l'acide sébacique, l'acide méthylsuccinique, l'acide éthylsuccinique, l'acide méthyladipique, l'acide méthylglutarique, l'acide diméthylglutarique, l'acide malique, l'acide citrique, l'acide isocitrique, l'acide tartarique. De manière très préférée, l'acide polycarboxylique peut être choisi dans le groupe constitué par l'acide succinique, l'acide glutarique, l'acide adipique, l'acide pimélique, l'acide subérique, l'acide azélaïque, l'acide sébacique, l'acide méthylsuccinique, l'acide éthylsuccinique, l'acide méthyladipique, l'acide méthylglutarique, l'acide diméthylglutarique, l'acide malique, l'acide citrique, l'acide tartarique.

Dans un premier mode de réalisation de l'invention, on ajoute un unique acide polycarboxylique au gâteau de filtration.

De préférence, l'acide polycarboxylique est alors l'acide succinique.

De manière préférée, lorsque l'acide polycarboxylique est l'acide succinique, il est ajouté au gâteau de filtration après l'opération de délitage.

Dans un second mode de réalisation préféré de l'invention, on ajoute un mélange d'acides polycarboxyliques au gâteau de filtration, ledit mélange comprenant au moins deux acides polycarboxyliques tels que définis ci-dessus. Le mélange peut comprendre deux, trois, quatre ou plus de quatre acides polycarboxyliques.

De préférence, les acides polycarboxyliques du mélange sont alors choisis parmi l'acide adipique, l'acide succinique, l'acide éthylsuccinique, l'acide glutarique, l'acide méthylglutarique, l'acide oxalique, l'acide citrique.

Selon l'invention, le mélange d'acides polycarboxyliques est de préférence un mélange d'acides dicarboxyliques et/ou tricarboxyliques, notamment un mélange d'au moins deux, de préférence d'au moins trois, acides dicarboxyliques et/ou tricarboxyliques, en particulier un mélange de trois acides dicarboxyliques et/ou tricarboxyliques.

De manière préférée, le mélange d'acides polycarboxyliques est un mélange d'acides dicarboxyliques, notamment un mélange d'au moins trois acides dicarboxyliques, en particulier un mélange de trois acides dicarboxyliques. En général le mélange consiste en trois acides dicarboxyliques, bien que des impuretés puissent être présentes en une quantité n'excédant pas généralement 2,00 % en poids du mélange total.

Selon une variante préférée de l'invention, le mélange d'acides polycarboxyliques utilisé dans l'invention comprend les acides suivants : acide adipique, acide glutarique et acide succinique. Par exemple, le mélange d'acides polycarboxyliques comprend 15,00 à 35,00 % en poids d'acide adipique, 40,00 à 60,00 % en poids d'acide glutarique et 15,00 à 25,00 % en poids d'acide succinique.

Le mélange d'acides polycarboxyliques selon cette première variante préférée de l'invention peut être issu d'un procédé de fabrication de l'acide adipique.

Selon une autre variante préférée de l'invention, le mélange d'acides polycarboxyliques utilisé dans l'invention comprend les acides suivants : acide méthylglutarique, acide éthylsuccinique et acide adipique. Les trois acides peuvent être présents dans le mélange en toutes proportions. Par exemple, le mélange d'acides polycarboxyliques comprend 60,00 à 96,00 % en poids d'acide méthylglutarique, 3,90 à 20,00 % en poids d'acide éthylsuccinique et 0,05 à 20,00 % en poids d'acide adipique.

Le mélange d'acides polycarboxyliques selon cette seconde variante préférée de l'invention peut être issu d'un procédé de fabrication de l'acide adipique.

De manière avantageuse, le mélange d'acides polycarboxyliques selon cette seconde variante préférée de l'invention peut être obtenu par hydrolyse acide, de préférence par hydrolyse basique, d'un mélange de méthylglutaronitrile, d'éthylsuccinonitrile et d'adiponitrile issu du procédé de fabrication de l'adiponitrile par hydrocyanation du butadiène, l'adiponitrile étant un intermédiaire important pour la synthèse de l'hexaméthylène diamine.

Une partie ou la totalité de l' (des) acide(s) polycarboxylique(s), en particulier acides dicarboxyliques et/ou tricarboxyliques, employé(s) selon l'invention peut être sous forme de dérivé d'acide carboxylique, à savoir sous la forme d'anhydride, d'ester, de sel (carboxylate) de métal alcalin (par exemple de sodium ou de potassium), de sel (carboxylate) de métal alcalino-terreux (par exemple de calcium) ou de sel (carboxylate) d'ammonium. Le terme « carboxylate » sera utilisé ci-après pour désigner les dérivés des groupes fonctionnels acide carboxylique tels que définis précédemment.

Par exemple, le mélange d'acides polycarboxyliques peut être un mélange comprenant :

- de l'acide méthylglutarique (en particulier de 60,00 à 96,00 % en poids, par exemple de 90,00 à 95,50 % en poids),
- de l'anhydride éthylsuccinique (en particulier de 3,90 à 20,00 % en poids, par exemple de 3,90 à 9,70 % en poids),
- de l'acide adipique (en particulier de 0,05 à 20,00 % en poids, par exemple de 0,10 à 0,30 % en poids).

Le mélange d'acides polycarboxyliques peut également être un mélange comprenant :

- de l'acide méthylglutarique (en particulier de 10,00 à 50,00 % en poids, par exemple de 25,00 à 40,00 % en poids),
- de l'anhydride méthylglutarique (en particulier de 40,00 à 80,00 % en poids, par exemple de 55,00 à 70,00 % en poids),
- de l'anhydride éthylsuccinique (en particulier de 3,90 à 20,00 % en poids, par exemple de 3,90 à 9,70 %),
- de l'acide adipique (en particulier de 0,05 à 20,00 % en poids, par exemple de 0,1 à 0,3 % en poids).

Les mélanges utilisés selon l'invention peuvent éventuellement contenir des impuretés.

Les acides polycarboxyliques utilisés dans l'invention peuvent éventuellement être préneutralisés (notamment en les prétraitant avec une base, par exemple de type soude ou potasse) avant leur ajout au gâteau de filtration. Cela permet notamment de modifier le pH de la silice obtenue.

Les acides polycarboxyliques peuvent être employés sous forme de solution aqueuse.

La quantité d'acide(s) polycarboxylique(s) employée est en général telle que le rapport acide(s) polycarboxylique(s) / quantité de silice exprimée en $SiO_2$ contenue dans le gâteau de filtration (au moment de l'ajout d'au moins un acide polycarboxylique) est compris entre 0,50 et 2,00 % en poids, de préférence entre 0,60 et 2,00 % en poids, notamment entre 0,55 et 1,75 % en poids, en particulier entre 0,60 et 1,50 % en poids, par exemple entre 0,65 et 1,25 % en poids.

Dans l'invention, le gâteau de filtration peut éventuellement être lavé.

La mise en œuvre, au cours de ou après l'opération de délitage, d'au moins un acide polycarboxylique et la succession d'étapes particulières, et en particulier la présence d'une première addition simultanée d'agent acidifiant et de silicate en milieu acide à pH entre 2,0 et 5,0 et d'une seconde addition simultanée d'agent acidifiant et de silicate en milieu basique à pH compris entre 7,0 et 10,0, confère aux produits obtenus leurs caractéristiques et propriétés particulières.

Le choix de l'agent acidifiant et du silicate se fait d'une manière bien connue en soi.

On utilise généralement comme agent acidifiant un acide minéral fort tel que l'acide sulfurique, l'acide nitrique ou l'acide chlorhydrique ou encore un acide organique tel que l'acide acétique, l'acide formique, l'acide carbonique.

L'agent acidifiant peut être dilué ou concentré ; sa normalité peut être comprise entre 0,4 et 36 N, par exemple entre 0,6 et 1,5 N.

En particulier, dans le cas où l'agent acidifiant est l'acide sulfurique, sa concentration peut être comprise entre 40 et 180 g/l, par exemple entre 60 et 130 g/l.

On peut utiliser en tant que silicate toute forme courante de silicates tels que les métasilicates, disilicates et avantageusement un silicate de métal alcalin notamment le silicate de sodium ou de potassium.

Le silicate peut présenter une concentration (exprimée en $SiO_2$) comprise entre 40 et 330 g/l, par exemple entre 60 et 300 g/l, en particulier entre 60 et 260 g/l.

De manière préférée, on emploie, comme agent acidifiant, l'acide sulfurique et, comme silicate, le silicate de sodium.

Dans le cas où l'on utilise le silicate de sodium, celui-ci présente, en général, un rapport pondéral $SiO_2/Na_2O$ compris entre 2,0 et 4,0, en particulier entre 2,4 et 3,9, par exemple entre 3,1 et 3,8.

On forme tout d'abord lors de l'étape (i) un pied de cuve aqueux présentant un pH compris entre 2,0 et 5,0.

De préférence, le pied de cuve formé présente un pH compris entre 2,5 et 5,0, notamment entre 3,0 et 4,5 ; ce pH est par exemple compris entre 3,5 et 4,5.

Ce pied de cuve initial peut être obtenu par ajout d'agent acidifiant à de l'eau de manière à obtenir une valeur de pH du pied de cuve entre 2,0 et 5,0, de préférence entre 2,5 et 5,0, notamment entre 3,0 et 4,5 et par exemple entre 3,5 et 4,5.

Il peut être également obtenu par ajout d'agent acidifiant à un mélange eau + silicate de manière à obtenir cette valeur de pH.

Il peut aussi être préparé par ajout d'agent acidifiant à un pied de cuve contenant des particules de silice préalablement formées à un pH inférieur à 7,0, de manière à obtenir une valeur de pH entre 2,0 et 5,0, de préférence entre 2,5 et 5,0, notamment entre 3,0 et 4,5 et par exemple entre 3,5 et 4,5.

Le pied de cuve formé dans l'étape (i) peut comprendre un électrolyte.

De préférence, le pied de cuve formé dans l'étape (i) contient un électrolyte.

Le terme d'électrolyte s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'agent acidifiant, par exemple le chlorure de sodium dans le cas de la réaction d'un silicate de sodium avec l'acide chlorhydrique ou, de préférence, le sulfate de sodium dans le cas de la réaction d'un silicate de sodium avec l'acide sulfurique.

De préférence, lorsque l'on utilise du sulfate de sodium comme électrolyte dans l'étape (i), sa concentration dans le pied de cuve initial est comprise, en particulier, entre 8 et 40 g/L, notamment entre 10 et 20 g/L, par exemple entre 13 et 18 g/L.

La deuxième étape (étape (ii)) consiste en une addition simultanée d'agent acidifiant et de silicate, de telle manière (en particulier à des débits tels) que le pH du milieu réactionnel soit maintenu entre 2,0 et 5,0, de préférence entre 2,5 et 5,0, notamment entre 3,0 et 4,5, par exemple entre 3,5 et 4,5.

Cette addition simultanée est avantageusement réalisée de manière telle que la valeur du pH du milieu réactionnel soit constamment égale (à ± 0,2 près) à celle atteinte à l'issue de l'étape initiale (i).

Puis, dans une étape (iii), on arrête l'addition de l'agent acidifiant tout en continuant l'addition de silicate dans le milieu réactionnel de manière à obtenir une valeur du pH du milieu réactionnel comprise entre 7,0 et 10,0, de préférence entre 7,5 et 9,5.

Il peut alors être avantageux d'effectuer juste après cette étape (iii) et donc juste après l'arrêt de l'addition de silicate, un mûrissement du milieu réactionnel, notamment au pH obtenu à l'issue de l'étape (iii), et en général sous agitation ; ce mûrissement peut par exemple durer de 2 à 45 minutes, en particulier de 5 à 25 minutes et ne comporte préférentiellement ni addition d'agent acidifiant, ni addition de silicate.

Après l'étape (iii) et l'éventuel mûrissement, on procède à une nouvelle addition simultanée d'agent acidifiant et de silicate, de telle manière (en particulier à des débits tels) que le pH du milieu réactionnel soit maintenu entre 7,0 et 10,0, de préférence entre 7,5 et 9,5.

Cette seconde addition simultanée (étape (iv)) est avantageusement réalisée de manière telle que la valeur du pH du milieu réactionnel soit constamment égale (à ± 0,2 près) à celle atteinte à l'issue de l'étape précédente.

Il est à noter que l'on peut, entre l'étape (iii) et l'étape (iv), par exemple entre, d'une part, l'éventuel mûrissement suivant l'étape (iii), et, d'autre part, l'étape (iv), ajouter au milieu réactionnel de l'agent acidifiant, le pH du milieu réactionnel à l'issue de cette addition d'acide étant cependant compris entre 7,0 et 9,5, de préférence entre 7,5 et 9,5.

Enfin, dans une étape (v), on arrête l'addition du silicate tout en continuant l'addition d'agent acidifiant dans le milieu réactionnel de manière à obtenir une valeur du pH du milieu réactionnel inférieure à 6,0, de préférence comprise entre 3,0 et 5,5, en particulier entre 3,0 et 5,0, par exemple entre 3,0 et 4,5.

Il peut alors être avantageux d'effectuer après cette étape (v) et donc juste après l'arrêt de l'addition d'agent acidifiant, un mûrissement du milieu réactionnel, notamment au pH obtenu à l'issue de l'étape (v), et en général sous agitation ; ce mûrissement peut par exemple durer de 2 à 45 minutes, en particulier de 5 à 20 minutes et ne comporte préférentiellement ni addition d'acide, ni addition de silicate.

L'enceinte réactionnelle dans laquelle est mis en œuvre l'ensemble de la réaction du silicate avec l'agent acidifiant est habituellement muni d'un équipement d'agitation et d'un équipement de chauffage adéquats.

L'ensemble de la réaction du silicate avec l'agent acidifiant est généralement réalisé entre 70 et 95 °C, en particulier entre 75 et 95 °C.

Selon une variante de l'invention, l'ensemble de la réaction du silicate avec l'agent acidifiant est effectué à une température constante, habituellement comprise entre 70 et 95 °C, en particulier entre 75 et 95 °C.

Selon une autre variante de l'invention, la température de fin de réaction est plus élevée que la température de début de réaction : ainsi, on maintient la température au début de la réaction (par exemple au cours des étapes (i) à (iii)) de préférence entre 70 et 85 °C, puis on augmente la température, de préférence jusqu'à une valeur comprise entre 85 et 95 °C, valeur à laquelle elle est maintenue (par exemple au cours des étapes (iv) et (v)) jusqu'à la fin de la réaction.

On obtient, à l'issue des étapes qui viennent d'être décrites, une bouillie de silice qui est ensuite séparée (séparation liquide-solide).

La séparation mise en œuvre dans le procédé de préparation selon l'invention comprend habituellement une filtration, suivie d'un lavage si nécessaire. La filtration s'effectue selon toute méthode convenable, par exemple au moyen d'un filtre à bande, d'un filtre sous vide ou, de préférence, d'un filtre presse.

Le gâteau de filtration est alors soumis à une opération de délitage. Conformément à l'exposé ci-dessus, on ajoute au moins un acide polycarboxylique au cours de ou après l'opération de délitage.

Le gâteau de filtration délité est ensuite séché.

Ce séchage peut se faire selon tout moyen connu en soi. De préférence, le séchage se fait par atomisation. A cet effet, on peut utiliser tout type d'atomiseur convenable, notamment un atomiseur à turbines, à buses, à pression liquide ou à deux fluides. En général, lorsque la filtration est effectuée à l'aide d'un filtre presse, on utilise un atomiseur à buses, et, lorsque la filtration est effectuée à l'aide d'un filtre sous-vide, on utilise un atomiseur à turbines.

Lorsque le séchage est effectué à l'aide d'un atomiseur à buses, la silice précipitée susceptible d'être alors obtenue se présente habituellement sous forme de billes sensiblement sphériques. A l'issue de ce séchage, on peut éventuellement procéder à une étape de broyage sur le produit récupéré ; la silice précipitée susceptible d'être alors obtenue se présente généralement sous forme d'une poudre.

Lorsque le séchage est effectué à l'aide d'un atomiseur à turbines, la silice précipitée susceptible d'être alors obtenue peut se présenter sous la forme d'une poudre.

Enfin, le produit séché (notamment par un atomiseur à turbines) ou broyé tel qu'indiqué précédemment peut éventuellement être soumis à une étape d'agglomération, qui consiste par exemple en une compression directe, une granulation voie humide (c'est-à-dire avec utilisation d'un liant tel que eau, suspension de silice...), une extrusion ou, de préférence, un compactage à sec. Lorsqu'on met en œuvre cette dernière technique, il peut s'avérer opportun, avant de procéder au compactage, de désaérer (opération appelée également pré-densification ou dégazage) les produits pulvérulents de manière à éliminer l'air inclus dans ceux-ci et assurer un compactage plus régulier.

La silice précipitée susceptible d'être alors obtenue par cette étape d'agglomération se présente généralement sous la forme de granulés.

L'invention est également relative aux silices précipitées obtenues ou susceptibles d'être obtenues par le procédé selon l'invention.

En général ces silices précipitées présentent à leur surface des molécules de l' (des) acide(s) polycarboxylique(s) employé(s) et/ou du (des) carboxylate(s) correspondant à l' (aux) acide(s) polycarboxylique(s) employé(s).

La présente invention a en outre pour objet une silice précipitée aux caractéristiques particulières, notamment utilisable comme charge alternative pour les compositions de polymères leur procurant de manière avantageuse une réduction de leur viscosité et une amélioration de leurs propriétés dynamiques tout en conservant leurs propriétés mécaniques.

Dans l'exposé qui suit, la surface spécifique BET est déterminée selon la méthode de BRUNAUER - EMMET - TELLER décrite dans « The Journal of the American Chemical Society », Vol. 60, page 309, février 1938 et correspondant à la norme NF ISO 5794-1 annexe D (juin 2010). La surface spécifique CTAB est la surface externe, pouvant être déterminée selon la norme NF ISO 5794-1 annexe G (juin 2010).

La teneur en acide polycarboxylique + carboxylate correspondant notée (C), exprimée en carbone total, peut être mesurée à l'aide d'un analyseur carbone soufre comme l'Horiba EMIA 320 V2. Le principe de l'analyseur carbone soufre est basé sur la combustion d'un échantillon solide dans un flux d'oxygène dans un four à induction (réglé à environ 170 mA) et en présence d'accélérateurs de combustion (environ 2 grammes de tungstène (en particulier Lecocel 763-266) et environ 1 gramme de fer). L'analyse dure environ 1 minute.

Le carbone contenu dans l'échantillon à analyser (masse d'environ 0,2 gramme) se combine avec l'oxygène pour former $CO_2$, CO. On analyse ensuite ces gaz de décomposition par un détecteur infrarouge.

L'humidité de l'échantillon et l'eau produite lors de ces réactions d'oxydation est éliminée par passage sur une cartouche contenant un agent déshydratant : le perchlorate de magnésium afin de ne pas interférer sur la mesure infrarouge.

Le résultat est exprimé en pourcentage massique en élément Carbone.

La présence d'acide(s) polycarboxylique(s) sous la forme acide et/ou sous la forme carboxylate peut être établie par Infrarouge de surface ou ATR-diamant (Attenuated Total Reflection).

L'analyse Infrarouge de surface (par transmission) est réalisée sur un spectromètre Bruker Equinoxe 55 sur une pastille de produit pur. La pastille est obtenue après broyage de la silice telle quelle dans un mortier en agate et pastillage à 2 T/cm² pendant 10 secondes. Le diamètre de la pastille est de 17 mm. Le poids de la pastille est entre 10 et 20 mg. La pastille ainsi obtenue est placée dans l'enceinte sous vide secondaire ($10^{-7}$ mbar) du spectromètre pendant une heure à température ambiante avant l'analyse par transmission. L'acquisition a lieu sous vide secondaire (conditions d'acquisition : de 400 $cm^{-1}$ à 6000 $cm^{-1}$ ; nombre de scans : 100 ; résolution : 2 $cm^{-1}$).

L'analyse par ATR-diamant, réalisée sur un spectromètre Bruker Tensor 27, consiste à déposer sur le diamant une pointe de spatule de silice préalablement broyée dans un mortier en agate, puis à exercer une pression. Le spectre Infrarouge est enregistré sur le spectromètre en 20 scans, de 650 $cm^{-1}$ à 4000 $cm^{-1}$. La résolution est de 4 $cm^{-1}$.

La méthode d'analyse granulométrique XDC par sédimentation centrifuge, à l'aide de laquelle est mesuré, d'une part, les largeurs de distribution de taille d'objets de la silice, et, d'autre part, le mode XDC illustrant sa taille d'objets, est décrite ci-après :

*Matériel nécessaire*

- granulomètre à sédimentation centrifuge BI-XDC (BROOKHAVEN-INSTRUMENT X DISC CENTRIFUGE) commercialisé par la société Brookhaven Instrument Corporation)
- bécher forme haute de 50 ml
- éprouvette graduée de 50 ml
- sonde à ultra-sons BRANSON 1500 watts, sans embout, de diamètre de 19 mm
- eau permutée
- cristallisoir rempli de glace
- agitateur magnétique

*Condition de mesure*

- version Windows 3.54 du logiciel (fournie par le constructeur du granulomètre)
- mode fixe
- vitesse de rotation : 5000 tr/min
- durée de l'analyse : 120 minutes
- densité (silice) : 2,1
- volume de la suspension à prélever : 15 ml

*Préparation de l'échantillon*

Ajouter dans le bécher forme haute 3,2 grammes de silice et 40 ml d'eau permutée.

Mettre le bécher contenant la suspension dans le cristallisoir rempli de glace.

Plonger la sonde à ultra-sons dans le bécher.

Désagglomérer la suspension pendant 16 minutes à l'aide de la sonde BRANSON de 1500 watts (utilisée en général à 60 % de la puissance maximale).

Lorsque la désagglomération est terminée, mettre le bécher sur un agitateur magnétique.

Refroidir la dispersion obtenue à la température ambiante (21 °C)

*Préparation du granulomètre*

Allumer l'appareil et laisser chauffer pendant au moins 30 minutes.

Rincer 2 fois le disque à l'eau permutée.

Entrer dans le logiciel les conditions de mesure mentionnées ci-dessus.

*Mesure du blanc :*

Introduire dans le disque 10 ml d'eau permutée, mettre en agitation balancier et faire une mesure du signal.

Retirer l'eau permutée.

*Mesure des échantillons :*

Introduire dans le disque 15 ml de l'échantillon à analyser, mettre en agitation balancier et faire une mesure du signal.

Faire les mesures.

Lorsque les mesures ont été effectuées :
Arrêter la rotation du disque.

Rincer plusieurs fois le disque à l'eau permutée.

Arrêter l'appareil.

*Résultats*

Dans le registre d'appareil, relever les valeurs des diamètres passant à 16 %, 50 % (ou médiane, taille pour laquelle on a 50 % en masse des agrégats de taille inférieure à cette taille) et 84 % (% massique) ainsi que la valeur du Mode (la dérivée de la courbe granulométrique cumulée donne une courbe de fréquence dont l'abscisse du maximum (abscisse de la population principale) est appelée le Mode).

La largeur Ld de distribution de taille d'objets, mesurée par granulométrie XDC, après désagglomération aux ultra-sons (dans l'eau), correspond au rapport (d84 - d16)/d50 dans lequel dn est la taille pour laquelle on a n% de particules (en masse) de taille inférieure à cette taille (la largeur Ld de distribution est donc calculée sur la courbe granulométrique cumulée, prise dans sa totalité).

La largeur L'd de distribution de taille d'objets inférieure à 500 nm, mesurée par granulométrie XDC, après désagglomération aux ultra-sons (dans l'eau), correspond au rapport (d84 - d16)/d50 dans lequel dn est la taille pour laquelle on a n% de particules (en masse), par rapport aux particules de taille inférieure à 500 nm, de taille inférieure à cette taille (la largeur L'd de distribution est donc calculée sur la courbe granulométrique cumulée, tronquée au-dessus de 500 nm).

Les volumes poreux et diamètres de pores sont mesurés par porosimétrie au mercure (Hg), à l'aide d'un porosimètre MICROMERITICS Autopore 9520, et sont calculés par la relation de WASHBURN avec un angle de contact théta égal à 140° et une tension superficielle gamma égale à 484 Dynes/cm (norme DIN 66133). La préparation de chaque échantillon se fait comme suit: chaque échantillon est préalablement séché pendant 2 heures en étuve à 200 °C.

$V_{(d5 - d50)}$ représente le volume poreux constitué par les pores de diamètres compris entre d5 et d50, et $V_{(d5 - d100)}$ représente le volume poreux constitué par les pores de diamètres compris entre d5 et d100, dn étant ici le diamètre de pores pour lequel n% de la surface totale de tous les pores est apporté par les pores de diamètre supérieur à ce diamètre (la surface totale des pores $(S_0)$ peut être déterminée à partir de la courbe d'intrusion de mercure).

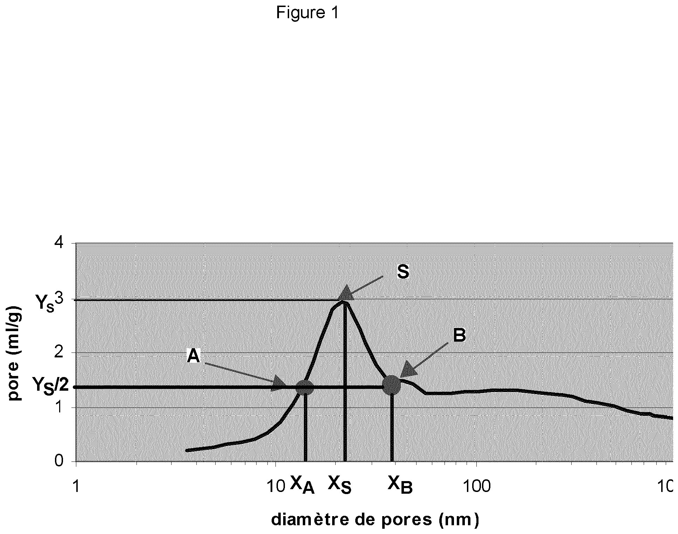

La largeur de distribution poreuse ldp s'obtient à partir de la courbe de répartition poreuse, comme indiqué à la figure 1, volume de pores (ml/g) en fonction du diamètre de pores (nm) : on relève les coordonnées du point S correspondant à la population principale, à savoir les valeurs du diamètre (nm) $X_s$ et du volume poreux (ml/g) $Y_S$ ; on trace une droite d'équation $Y = Y_S/2$ ; cette droite coupe la courbe de répartition poreuse en deux points A et B ayant pour abscisse (nm) respectivement $X_A$ et $X_B$ de part et d'autre de $X_S$; la largeur de distribution poreuse ldp est égale au rapport $(X_A - X_B) / X_S$.

En fonction de la source des matières premières utilisées pour le silicate, les silices précipitées selon l'invention peuvent contenir des éléments supplémentaires, tels que par exemple des métaux. Parmi lesdits éléments supplémentaires, on peut citer l'aluminium. Le teneur en aluminium notée (Al) est en général inférieure à 1200 ppm, de préférence inférieure à 700 ppm, en particulier inférieure à 600 ppm, de manière plus préférée inférieure à 500 ppm.

La composante dispersive de l'énergie de surface $\gamma_s^d$ est déterminée par chromatographie gazeuse inverse. Un broyage de la silice est en général nécessaire quand elle se présente sous forme de granulés, suivi par un tamisage par exemple à 106 $\mu$m - 250 $\mu$m.

La technique utilisée pour calculer la composante dispersive de l'énergie de surface $\gamma_s^d$ est la Chromatographie Gazeuse Inverse à Dilution Infinie (CGI-DI), à 110°C en utilisant une série d'alcanes (normaux) allant de 6 à 10 atomes de carbone, une technique basée sur la chromatographie gazeuse, mais où le rôle de la phase mobile et de la phase stationnaire (remplissage) sont inversés. Ici, la phase stationnaire dans la colonne est remplacée par le matériau (solide) à analyser, ici la silice précipitée. Quant à la phase mobile, elle est constituée par le gaz vecteur (hélium) et des molécules "sondes" choisies en fonction de leur capacité d'interaction. Les mesures sont réalisées successivement avec chaque molécule sonde. Pour chaque mesure, chaque molécule sonde est injectée dans la colonne, en très faible quantité (dilution infinie), en mélange avec du méthane. Le méthane est utilisé pour déterminer le t0, le temps mort de la colonne.

La soustraction de ce temps mort t0 au temps de rétention de la sonde injectée conduit au temps de rétention net ($t_N$) de celle-ci.

Ces conditions opératoires, propres à la dilution infinie, font que ces temps de rétention reflètent uniquement l'interactivité de l'échantillon vis-à-vis de ces molécules. Physiquement, $t_N$ correspond au temps moyen que la molécule sonde a passé au contact de la phase stationnaire (le solide analysé). Pour chaque molécule sonde injectée, trois temps de rétention net $t_N$ sont mesurés. La valeur moyenne et l'écart-type correspondant sont utilisés pour déterminer les volumes de rétention spécifique ($V_g^0$) en s'appuyant sur la relation suivante (formule [1]).

$$V_g^0 = \frac{D_c t_N}{M_s} \cdot \frac{273,15}{T} \qquad \text{formule [1]}$$

Ce dernier correspond au volume de gaz vecteur (ramené à 0°C) nécessaire pour éluer la molécule sonde pour 1 gramme de phase stationnaire (solide examiné). Cette grandeur standard permet de comparer les résultats quel que soit le débit de gaz vecteur et la masse de phase stationnaire utilisée. La formule [1] fait appel à : *Ms,* la masse de solide dans la colonne, *Dc* le débit de gaz vecteur et *T* la température de mesure.

Le volume de rétention spécifique est ensuite utilisé pour accéder à *ΔGa*, la variation d'enthalpie libre d'adsorption de la sonde, selon la formule [2], avec R la constante universelle des gaz parfaits (R = 8,314 J·K$^{-1}$·mol$^{-1}$), sur le solide contenu dans la colonne.

$$\Delta G_a = RT.Ln(V_g^0) \qquad \text{formule [2]}$$

Cette grandeur *ΔGa* est le point de départ pour la détermination de la composante dispersive de l'énergie de surface ($\gamma_s^d$). Celle-ci est obtenue en traçant la droite représentant la variation d'enthalpie libre d'adsorption (*ΔGa*) en fonction du nombre de carbone $n_c$ des sondes n-alcanes tel qu'indiqué dans le tableau ci-dessous.

| Sondes n-alcanes | $n_c$ |
|---|---|
| n-hexane | 6 |
| n-heptane | 7 |
| n-octane | 8 |
| n-nonane | 9 |
| n-décane | 10 |

On peut alors déterminer la composante dispersive de l'énergie de surface $\gamma_s^d$ à partir de la pente *ΔGa(CH2)* de la droite des alcanes normaux, correspondant à l'enthalpie libre d'adsorption du groupe méthylène, obtenue pour une température de mesure de 110°C.

La composante dispersive de l'énergie de surface $\gamma_s^d$ est alors reliée à l'enthalpie libre d'adsorption *ΔGa(CH2)* du groupe méthylène (méthode Dorris et Gray, J. Colloid Interface Sci., 77 (180), 353-362) par la relation suivante :

$$\gamma_S^d = \frac{(\Delta G_a^{'CH_2})^2}{4N_A^2.a_{CH_2}^2.\gamma_{CH_2}}$$

dans laquelle $N_A$ est le nombre d'Avogadro ($6,02.10^{23}$ mol$^{-1}$), $a_{CH_2}$ l'aire occupée par un groupement méthylène adsorbée ($0,06$ nm$^2$) et $\gamma_{CH_2}$ l'énergie de surface d'un solide constitué uniquement de groupe méthylène et déterminée sur le polyéthylène ($35,6$ mJ/m$^2$ à 20 °C).

La technique utilisée pour mesurer la reprise en eau consiste généralement à placer, dans des conditions d'humidité relative données et pendant une durée prédéfinie, l'échantillon de silice préalablement séché ; la silice s'hydrate alors, ce qui fait passer la masse de l'échantillon d'une valeur initiale m (à l'état séché) à une valeur finale m + dm. On désigne spécifiquement par « reprise en eau » d'une silice, en particulier dans toute la suite de l'exposé, le rapport dm/m (c'est-à-dire la masse d'eau intégrée à l'échantillon rapportée à la masse de l'échantillon à l'état sec) exprimé en pourcentage calculé pour un échantillon de silice soumis aux conditions suivantes lors de la méthode de mesure :

- séchage préliminaire : 8 heures, à 150 °C ;
- hydratation : 24 heures, à 20 °C, et sous une humidité relative de 70 %.

Le protocole expérimental mis en œuvre consiste à successivement :

- peser exactement environ 2 grammes de la silice à tester ;
- sécher pendant 8 heures la silice ainsi pesée dans une étuve réglée à une température de 105 °C ;
- déterminer la masse m de la silice obtenue à l'issue de ce séchage ;
- disposer pendant 24 heures, à 20 °C, la silice séchée dans un récipient fermé tel qu'un dessicateur contenant un mélange eau / glycérine, de façon à ce que l'humidité relative du milieu fermé soit de 70 % ;
- déterminer la masse (m + dm) de la silice obtenue suite à ce traitement de 24 heures à 70 % d'humidité relative, la mesure de cette masse étant effectuée immédiatement après avoir sorti la silice du dessicateur, de manière à éviter une variation de la masse de la silice sous l'influence du changement d'hygrométrie entre le milieu à 70 % d'humidité relative et l'atmosphère du laboratoire.

L'aptitude à la dispersion et à la désagglomération des silices peut être quantifiée au moyen du test spécifique de désagglomération ci-dessous.

La cohésion des agglomérats est appréciée par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns). La désagglomération sous ultrasons est effectuée à l'aide d'un sonificateur VIBRACELL BIOBLOCK (600 W), utilisé à 80 % de la puissance maximale, équipé d'une sonde de diamètre 19 mm. La mesure granulométrique est effectuée par diffraction laser sur un granulomètre MALVERN (Mastersizer 2000) en mettant en œuvre la théorie de Fraunhofer.

On introduit 1 gramme (+/- 0,1 gramme) de silice dans un bécher de 50 ml (hauteur : 7,5 cm et diamètre : 4,5 cm) et l'on complète à 50 grammes par ajout de 49 grammes (+/- 0,1 gramme) d'eau permutée. On obtient ainsi une suspension aqueuse à 2 % de silice.

On procède ensuite à la désagglomération sous ultra-sons pendant 7 minutes.

On réalise ensuite la mesure granulométrique en introduisant dans la cuve du granulomètre la totalité de la suspension homogénéisée.

Le diamètre médian $\varnothing_{50M}$ (ou diamètre médian Malvern), après désagglomération aux ultra-sons, est tel que 50 % des particules en volume ont une taille inférieure à $\varnothing_{50M}$ et 50 % ont une taille supérieure à $\varnothing_{50M}$. La valeur du diamètre médian $\varnothing_{50M}$ que l'on obtient est d'autant plus faible que la silice présente une aptitude à la désagglomération élevée.

Il est également possible de déterminer de la même façon le facteur de désagglomération Malvern $F_{DM}$ par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns). La désagglomération sous ultra-sons est effectuée à l'aide d'un sonificateur VIBRACELL BIOBLOCK (600 W), utilisé à 80 % de la puissance maximale, équipé d'une sonde de diamètre 19 mm. La mesure granulométrique est effectuée par diffraction laser sur un granulomètre MALVERN (Mastersizer 2000) en mettant en œuvre la théorie de Fraunhofer.

On introduit 1 gramme (+/- 0,1 gramme) de silice dans un bécher de 50 ml (hauteur : 7,5 cm et diamètre : 4,5 cm) et l'on complète à 50 grammes par ajout de 49 grammes (+/- 0,1 gramme) d'eau permutée. On obtient ainsi une suspension aqueuse à 2 % de silice.

On procède ensuite à la désagglomération sous ultra-sons pendant 7 minutes.

On réalise ensuite la mesure granulométrique en introduisant dans la cuve du granulomètre la totalité de la suspension homogénéisée.

Ce facteur de désagglomération est déterminé par le rapport (10 x valeur de l'obscuration du laser bleu / valeur de l'obscuration du laser rouge), cette densité optique correspondant à la valeur réelle détectée par le granulomètre lors de l'introduction de la silice.

Ce rapport (facteur de désagglomération Malvern $F_{DM}$) est indicatif du taux de particules de taille inférieure à 0,1 $\mu$m qui ne sont pas détectées par le granulomètre. Ce rapport est d'autant plus élevé que la silice présente une aptitude à la désagglomération élevée.

Le pH est mesuré selon la méthode suivante dérivant de la norme ISO 787/9 (pH d'une suspension à 5 % dans l'eau) :

*Appareillage :*

- pHmètre étalonné (précision de lecture au 1/100$^e$)
- électrode de verre combinée
- bécher de 200 ml
- éprouvette de 100 ml
- balance de précision à 0,01 g près.

*Mode opératoire :*

5 grammes de silice sont pesées à 0,01 gramme près dans le bécher de 200 ml. 95 ml d'eau mesurés à partir de l'éprouvette graduée sont ensuite ajoutés à la poudre de silice. La suspension ainsi obtenue est agitée énergiquement (agitation magnétique) pendant 10 minutes. La mesure du pH est alors effectuée.

Selon une première variante de l'invention, la silice précipitée selon l'invention est caractérisée en ce qu'elle possède :

- une surface spécifique BET comprise entre 45 et 550 m$^2$/g, notamment entre 70 et 370 m$^2$/g, en particulier entre 80 et 350 m$^2$/g,
- une surface spécifique CTAB comprise entre 40 et 525 m$^2$/g, notamment entre 70 et 350 m$^2$/g, en particulier entre 80 et 310 m$^2$/g,
- une teneur (C) en acide polycarboxylique + carboxylate correspondant, exprimée en carbone total, d'au moins 0,15 % en poids, notamment d'au moins 0,20 % en poids,
- une largeur Ld ((d84 - d16)/d50) de distribution de taille d'objets mesurée par granulométrie XDC après désagglomération aux ultra-sons d'au moins 0,91, en particulier d'au moins 0,94 et,
- une répartition du volume poreux telle que le rapport $V_{(d5 - d50)}/V_{(d5 - d100)}$ est d'au moins 0,65, notamment d'au moins 0,66, en particulier d'au moins 0,68

La silice selon cette variante de l'invention possède par exemple :

- une largeur Ld ((d84 - d16)/d50) de distribution de taille de distribution de taille d'objets mesurée par granulométrie XDC après désagglomération aux ultra-sons d'au moins 1,04 et
- une répartition du volume poreux telle que le rapport $V_{(d5 - d50)}/V_{(d5 - d100)}$ est d'au moins 0,70, notamment d'au moins 0,71.

Cette silice peut présenter un rapport $V_{(d5 - d50)}/V_{(d5 - d100)}$ d'au moins 0,73, en particulier d'au moins 0,74. Ce rapport peut être d'au moins 0,78, notamment d'au moins 0,80, voire d'au moins 0,84.

Selon une seconde variante de l'invention, la silice précipitée selon l'invention est caractérisée en ce qu'elle possède :

- une surface spécifique BET comprise entre 45 et 550 m$^2$/g, notamment entre 70 et 370 m$^2$/g, en particulier entre 80 et 350 m$^2$/g,

- une surface spécifique CTAB comprise entre 40 et 525 m$^2$/g, notamment entre 70 et 350 m$^2$/g, en particulier entre 80 et 310 m$^2$/g,
- une teneur (C) en acide polycarboxylique + carboxylate correspondant, exprimée en carbone total, d'au moins 0,15 % en poids, notamment d'au moins 0,20 % en poids,
- une largeur de distribution poreuse ldp supérieure à 0,65, notamment supérieure à 0,70, en particulier supérieure à 0,80.

Cette silice peut présenter une largeur de distribution poreuse ldp supérieure à 1,05, par exemple à 1,25, voire 1,40.

La silice selon cette variante de l'invention possède de préférence une largeur Ld ((d84 - d16)/d50) de distribution de taille de distribution de taille d'objets mesurée par granulométrie XDC après désagglomération aux ultra-sons d'au moins 0,91, en particulier d'au moins 0,94, par exemple d'au moins 1,0.

Les silices précipitées selon l'invention (c'est-à dire, conformes à l'une des deux variantes de l'invention) peuvent notamment présenter une surface spécifique BET comprise entre 100 et 320 m$^2$/g, en particulier entre 120 et 300 m$^2$/g, par exemple entre 130 et 280 m$^2$/g.

Les silices précipitées selon l'invention peuvent notamment présenter une surface spécifique CTAB comprise entre 100 et 300 m$^2$/g, en particulier entre 120 et 280 m$^2$/g, par exemple entre 130 et 260 m$^2$/g.

En général, les silices précipitées selon l'invention présentent un rapport surface spécifique BET/surface spécifique CTAB compris entre 0,9 et 1,2, c'est-à-dire qu'elle présente une faible microporosité.

Les silices précipitées selon l'invention peuvent notamment présenter une teneur (C) en acide polycarboxylique + carboxylate correspondant, exprimée en carbone total, d'au moins 0,24 % en poids, en particulier d'au moins 0,30 % en poids, par exemple d'au moins 0,35 % en poids, voire d'au moins 0,45 % en poids.

Elles présentent généralement une teneur en acide polycarboxylique + carboxylate (C) d'au plus 10,00 % en poids, en particulier d'au plus 5,00 % en poids.

La présence des acides polycarboxyliques et/ou des carboxylates correspondants aux acides polycarboxyliques à la surface des silices selon l'invention peut être illustrée par la présence d'épaulements caractéristiques des liaisons C-O et C=O, visibles sur les spectres Infrarouge, obtenus notamment par Infrarouge de surface (transmission) ou ATR-diamant (en particulier entre 1540 et 1590 cm$^{-1}$ et entre 1380 et 1420 cm$^{-1}$ pour C-O, et entre 1700 et 1750 cm$^{-1}$ pour C=O).

En général les silices précipitées selon l'invention présentent à leur surface des molécules de l' (des) acide(s) polycarboxylique(s) précité(s), en particulier des acides polycarboxyliques des mélanges précités, et/ou du (des) carboxylate(s) correspondant à l' (aux) acide(s) polycarboxylique(s) précité(s), en particulier correspondant aux acides polycarboxyliques des mélanges précités.

Par exemple, elles peuvent présenter à leur surface :

- des molécules d'acide adipique sous forme acide et/ou sous forme carboxylate,

et

- des molécules d'acide glutarique sous forme acide et/ou sous forme carboxylate,

et

- des molécules d'acide succinique sous forme acide et/ou sous forme carboxylate.

Par exemple, elles peuvent présenter à leur surface :

- des molécules d'acide méthylglutarique sous forme acide et/ou sous forme carboxylate,

et

- des molécules d'acide éthylsuccinique sous forme acide et/ou sous forme carboxylate,

et

- des molécules d'acide adipique sous forme acide et/ou sous forme carboxylate.

De préférence, les silices selon l'invention présentent une composante dispersive de l'énergie de surface $\gamma_s^d$ inférieure à 52 mJ/m$^2$, notamment inférieure à 50 mJ/m$^2$, en particulier d'au plus 45 mJ/m$^2$, par exemple inférieure à

40 mJ/m$^2$, voire inférieure à 35 mJ/m$^2$.

De préférence, les silices selon l'invention possèdent une largeur L'd ((d84 - d16)/d50) de distribution de taille d'objets inférieure à 500 nm, mesurée par granulométrie XDC après désagglomération aux ultra-sons, d'au moins 0,95.

Dans les silices selon l'invention, le volume poreux apporté par les pores les plus gros représente habituellement la plus grande partie de la structure.

Elles peuvent présenter à la fois une largeur Ld de distribution de taille d'objets d'au moins 1,04 et une largeur L'd de distribution de taille d'objets (inférieure à 500 nm) d'au moins 0,95.

La largeur Ld de distribution de taille d'objets des silices selon l'invention peut dans certains cas être d'au moins 1,10, en particulier d'au moins 1,20 ; elle peut être d'au moins 1,30, par exemple d'au moins 1,50, voire d'au moins 1,60.

De même la largeur L'd de distribution de taille d'objets (inférieure à 500 nm) des silices selon l'invention peut être par exemple d'au moins 1,0, en particulier d'au moins 1,10, notamment d'au moins 1,20.

Les silices précipitées selon l'invention peuvent présenter une reprise en eau supérieure à 6 %, en particulier supérieure à 7 %, notamment supérieure à 7,5 %, par exemple supérieure à 8 %, voire supérieure à 8,5 %.

En général, les silices précipitées selon l'invention présentent une aptitude à la dispersion (notamment dans les élastomères) et à la désagglomération élevée.

Les silices précipitées selon l'invention peuvent présenter un diamètre médian $\emptyset_{50M}$ après désagglomération aux ultra-sons d'au plus 10,0 $\mu$m, de préférence d'au plus 9,0 $\mu$m, notamment compris entre 3,5 et 8,5 $\mu$m.

Les silices précipitées selon l'invention peuvent présenter un facteur de désagglomération aux ultra-sons $F_{DM}$ supérieur à 5,5 ml, en particulier supérieur à 7,5 ml, par exemple supérieur à 12,0 ml.

Les silices précipitées selon l'invention présentent, de préférence, un pH compris entre 3,5 et 7,5, de manière encore plus préférée entre 4,0 et 7,0, en particulier entre 4,5 et 6,5.

L'état physique dans lequel se présentent les silices précipitées selon l'invention peut être quelconque, c'est-à-dire qu'elles peuvent se présenter sous forme de billes sensiblement sphériques (microperles), de poudre ou de granulés.

Elles peuvent ainsi se présenter sous forme de billes sensiblement sphériques de taille moyenne d'au moins 80 $\mu$m, de préférence d'au moins 150 $\mu$m, en particulier comprise entre 150 et 270 $\mu$m ; cette taille moyenne est déterminée selon la norme NF X 11507 (décembre 1970) par tamisage à sec et détermination du diamètre correspondant à un refus cumulé de 50 %.

Elles peuvent également se présenter sous forme de poudre de taille moyenne d'au moins 15 $\mu$m, en particulier d'au moins 20 $\mu$m, de préférence d'au moins 30 $\mu$m.

Elles peuvent se présenter sous forme de granulés (en général de forme sensiblement parallélépipédique) de taille d'au moins 1 mm, par exemple comprise entre 1 et 10 mm, notamment selon l'axe de leur plus grande dimension.

Les silices selon l'invention sont de préférence obtenues par le procédé décrit précédemment.

De manière avantageuse, les silices précipitées selon la présente invention ou (susceptibles d'être) obtenues par le procédé selon l'invention précédemment décrit confèrent aux compositions de polymère(s) (élastomère(s)) dans lesquelles elles sont introduites, un compromis de propriétés très satisfaisant, notamment une réduction de leur viscosité et de préférence une amélioration de leurs propriétés dynamiques tout en conservant leurs propriétés mécaniques. Elles permettent ainsi de manière avantageuse une amélioration du compromis mise en œuvre / renforcement / propriétés hystérétiques. De manière préférée, elles présentent une bonne aptitude à la dispersion et à la désagglomération dans les compositions de polymère(s) (élastomère(s)).

Les silices précipitées selon la présente invention ou (susceptibles d'être) obtenues par le procédé selon l'invention précédemment décrit peuvent être utilisées dans de nombreuses applications.

Elles peuvent être employées par exemple comme support de catalyseur, comme absorbant de matières actives (en particulier support de liquides, notamment utilisés dans l'alimentation, tels que les vitamines (vitamine E), le chlorure de choline), dans des compositions de polymère(s), notamment d'élastomère(s), de silicone(s), comme agent viscosant, texturant ou anti-mottant, comme élément pour séparateurs de batteries, comme additif pour dentifrice, pour béton, pour papier.

Cependant, elles trouvent une application particulièrement intéressante dans le renforcement des polymères, naturels ou synthétiques.

Les compositions de polymère(s) dans lesquelles elles peuvent être employées, notamment à titre de charge renforçante, sont en général à base d'un ou plusieurs polymères ou copolymères (notamment bipolymères ou terpolymères), en particulier d'un ou plusieurs élastomères, présentant, de préférence, au moins une température de transition vitreuse comprise entre -150 et +300 °C, par exemple entre -150 et + 20 °C.

A titre de polymères possibles, on peut mentionner notamment les polymères diéniques, en particulier les élastomères diéniques.

Par exemple, on peut utiliser les polymères ou copolymères (notamment bipolymères ou terpolymères) dérivant de monomères aliphatiques ou aromatiques, comprenant au moins une insaturation (tels que, notamment, l'éthylène, le propylène, le butadiène, l'isoprène, le styrène, l'acrylonitrile, l'isobutylène, l'acétate de vinyle), le polyacrylate de butyle, ou leurs mélanges ; on peut également citer les élastomères silicones, les élastomères fonctionnalisés, par exemple par des groupements chimiques disposés tout le long de la chaîne macromoléculaire et/ou en une ou plusieurs de ses extrémités (par exemple par des fonctions susceptibles de réagir avec la surface de la silice) et les polymères halogénés. On peut mentionner les polyamides et les polymères fluorés (tels que le polyfluorure de vinylidène).

On peut également mentionner les polymères thermoplastiques tels que le polyéthylène.

Le polymère (copolymère) peut être un polymère (copolymère) en masse, un latex de polymère (copolymère) ou bien une solution de polymère (copolymère) dans l'eau ou dans tout autre liquide dispersant approprié.

A titre d'élastomères diéniques, on peut mentionner par exemple les polybutadiènes (BR), les polyisoprènes (IR), les copolymères de butadiène, les copolymères d'isoprène, ou leurs mélanges, et en particulier les copolymères de styrène-butadiène (SBR, notamment ESBR (émulsion) ou SSBR (solution)), les copolymères d'isoprène-butadiène (BIR), les copolymères d'isoprène-styrène (SIR), les copolymères d'isoprène-butadiène-styrène (SBIR), les terpolymères éthylène-propylène-diène (EPDM) ainsi que les polymères fonctionnalisés associés (présentant par exemple des groupements polaires inclus dans la chaîne, pendant ou en bout de chaine et pouvant interagir avec la silice).

On peut également citer le caoutchouc naturel (NR) et le caoutchouc naturel époxydé (ENR).

Les compositions de polymère(s) peuvent être vulcanisées au soufre (on obtient alors des vulcanisats) ou réticulées notamment aux peroxydes ou autres systèmes de réticulation (par exemple diamines ou résines phénoliques).

En général, les compositions de polymère(s) comprennent en outre au moins un agent de couplage (silice/polymère) et/ou au moins un agent de recouvrement ; elles peuvent également comprendre, entre autres, un agent antioxydant.

On peut notamment utiliser comme agents de couplages, à titre d'exemples non limitatifs, des silanes polysulfurés, dits « symétriques » ou « asymétriques » ; on peut citer plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-(triméthoxysilyl)propyl) ou les polysulfures de bis(3-(triéthoxysilyl)propyl), tels que le tétrasulfure de triéthoxysilylpropyle. On peut également citer le tétrasulfure de monoéthoxydiméthylsilylpropyle. On peut également citer des silanes à fonction thiols masqués ou non, à fonction amines.

L'agent de couplage peut être préalablement greffé sur le polymère.

Il peut être également employé à l'état libre (c'est-à-dire non préalablement greffé) ou greffé à la surface de la silice. Il en est de même de l'éventuel agent de recouvrement.

A l'agent de couplage peut éventuellement être associé un « activateur de couplage » approprié, c'est-à-dire un composé qui, mélangé avec cet agent de couplage, augmente l'efficacité de ce dernier.

La proportion en poids de silice dans la composition de polymère(s) peut varier dans une gamme assez large. Elle représente habituellement 0,1 à 3,0 fois en poids, en particulier 0,1 à 2,0 fois en poids, notamment 0,2 à 1,5 fois en poids, par exemple 0,2 à 1,2 fois en poids, voire 0,3 à 0,8 fois en poids, de la quantité du (des) polymère(s).

La silice selon l'invention peut avantageusement constituer la totalité de la charge inorganique renforçante, et même la totalité de la charge renforçante, de la composition de polymère(s).

Cependant, à cette silice selon l'invention peut être éventuellement associée au moins une autre charge renforçante, comme en particulier une silice hautement dispersible commerciale telle que par exemple la Z1165MP, la Z1115MP, une silice précipitée traitée (par exemple « dopée » à l'aide d'un cation comme l'aluminium ou traitée avec un agent de couplage tel qu'un silane) ; une autre charge inorganique renforçante telle que par exemple l'alumine, voire même une charge organique renforçante, notamment du noir de carbone (éventuellement recouvert d'une couche inorganique, par exemple de silice). La silice selon l'invention constitue alors de préférence au moins 50 %, voire au moins 80 % en poids de la totalité de la charge renforçante.

On peut citer, comme exemples non limitatifs d'articles finis comprenant au moins une (en particulier à base) desdites compositions de polymère(s) décrites précédemment (notamment à base des vulcanisats mentionnés ci-dessus), les semelles de chaussures (de préférence en présence d'un agent de couplage (silice/polymère), par exemple le tétrasulfure de triéthoxysilylpropyle), les revêtements de sols, les barrières aux gaz, les matériaux ignifugeants et également les pièces techniques telles que les galets de téléphériques, les joints d'appareils électroménagers, les joints de conduites de liquides ou de gaz, les joints de système de freinage, les tuyaux (flexibles), les gaines (notamment les gaines de câbles), les câbles, les supports de moteur, les séparateurs de batterie, les bandes de convoyeur, les courroies de transmissions, ou, de préférence, les pneumatiques, en particulier les bandes de roulement de pneumatiques (notamment pour véhicules légers ou pour véhicules poids lourds (camions par exemple)).

Les exemples suivants illustrent l'invention sans toutefois en limiter la portée.

EXEMPLES

EXEMPLE 1

Dans un réacteur de 2000 litres, on introduit 700 litres d'eau industrielle. Cette solution est portée à 80 °C par chauffage par injection directe de vapeur. Sous agitation (95 tr/min), de l'acide sulfurique, de concentration égale à 80 g/l, est introduit jusqu'à ce que le pH atteigne une valeur de 4.

On introduit simultanément dans le réacteur pendant 35 minutes une solution de silicate de sodium (de rapport pondéral $SiO_2/Na_2O$ égal à 3,52) ayant une concentration de 230 g/l à un débit de 190 l/h et de l'acide sulfurique, de concentration égale à 80 g/l, à un débit régulé de manière à maintenir le pH du milieu réactionnel à une valeur de 4.

Au terme des 35 minutes d'addition simultanée, l'introduction d'acide est arrêtée tant que le pH n'a pas atteint une valeur égale à 8. Une nouvelle addition simultanée est ensuite réalisée pendant 40 minutes avec un débit de silicate de sodium de 190 l/h (même silicate de sodium que pour la première addition simultanée) et un débit d'acide sulfurique, de concentration égale à 80 g/l, régulé de manière à maintenir le pH du milieu réactionnel à une valeur de 8.

A l'issue de cette addition simultanée, le milieu réactionnel est amené à un pH de 5,2 par de l'acide sulfurique de concentration égale à 80 g/l. Le milieu est mûri pendant 5 minutes à pH 5,2.

La bouille est filtrée et lavée sous filtre presse et on obtient un gâteau de silice précipitée ayant un extrait sec de 22 %.

EXEMPLE 2

Une partie du gâteau de silice obtenu à l'exemple 1 est ensuite soumis à une étape de délitage.

Lors de l'opération de délitage, on utilise une solution d'un mélange MGA à 34 % massique (mélange d'acides polycarboxyliques : 94,8 % en poids d'acide méthylglutarique, 4,9 % en poids d'anhydride éthylsuccinique, 0,2 % en poids d'acide adipique, 0,1 % autres).

On fait subir au gâteau obtenu à l'étape de filtration une opération de délitage dans un réacteur fortement agité continu avec ajout au gâteau de 36,8 grammes de la solution de MGA (rapport pondéral mélange MGA / $SiO_2$ de 1 %).

Ce gâteau délité (ayant un extrait sec de 22 % en poids) est ensuite séché au moyen d'un atomiseur à buses bi-fluide en pulvérisant le gâteau délité au travers d'une buse SU5 (Spraying System) de 2,54 mm avec une pression de 1 bar sous les conditions moyennes de débit et de températures suivantes :

Température d'entrée moyenne : 250 °C
Température de sortie moyenne : 135 °C
Débit moyen : 15 l/h.

Les caractéristiques de la silice S1 obtenue (sous forme de billes sensiblement sphériques) sont alors les suivantes :

| | |
|---|---|
| BET ($m^2$/g) | 217 |
| Teneur en acide polycarboxylique + carboxylate (C) (%) | 0,42 |
| Teneur en aluminium (Al) (%) | 0,08 |
| CTAB ($m^2$/g) | 214 |
| $\gamma_s^d$ (mJ/$m^2$) | 42,8 |
| Largeur Ld (XDC) | 1,02 |
| $V_{(d5-d50)}/V_{(d5-d100)}$ | 0,71 |
| Largeur de distribution poreuse ldp | 1,07 |
| Largeur L'd (XDC) | 0,95 |
| Reprise en eau (%) | 8,4 |
| $\emptyset_{50M}$ ($\mu$m) après désagglomération aux ultra-sons | 4,1 |
| $F_{DM}$ après désagglomération aux ultra-sons | 16,1 |
| pH | 3,96 |

EXEMPLE 3 (Comparatif)

Une partie du gâteau de silice obtenu à l'exemple 1 est ensuite soumis à une étape de délitage.

On fait subir au gâteau obtenu à l'étape de filtration une opération de délitage dans un réacteur fortement agité continu avec ajout simultané au gâteau de 27,8 grammes d'une solution d'aluminate de sodium (rapport pondéral $Al/SiO_2$ de 0,3 %) et de 29,8 grammes d'une solution d'acide sulfurique à 7,7 % massique.

Ce gâteau délité (ayant un extrait sec de 22 % en poids) est ensuite séché au moyen d'un atomiseur à buses bi-fluide en pulvérisant le gâteau délité au travers d'une buse SU5 (Spraying System) de 2,54 mm avec une pression de 1 bar sous les conditions moyennes de débit et de températures suivantes :

Température d'entrée moyenne : 250 °C
Température de sortie moyenne : 135 °C
Débit moyen : 15 l/h.

Les caractéristiques de la silice C1 obtenue (sous forme de billes sensiblement sphériques) sont alors les suivantes :

| | |
|---|---|
| BET ($m^2/g$) | 221 |
| Teneur en acide polycarboxylique + carboxylate (C) (%) | - |
| Teneur en aluminium (Al) (%) | 0,4 |
| CTAB ($m^2/g$) | 206 |
| $\gamma_s^d$ ($mJ/m^2$) | 59,6 |
| Largeur Ld (XDC) | 1,08 |
| $V_{(d5-d50)}/V_{(d5-d100)}$ | 0,69 |
| Largeur de distribution poreuse ldp | 1,06 |
| Largeur L'd (XDC) | 0,97 |
| Reprise en eau (%) | 8,9 |
| $\emptyset_{50M}$ ($\mu m$) après désagglomération aux ultra-sons | 6,2 |
| $F_{DM}$ après désagglomération aux ultra-sons | 15,3 |
| pH | 6,47 |

EXEMPLE 4

Dans un mélangeur interne de type Brabender (380 ml), on prépare les compositions élastomériques dont la constitution, exprimée en partie en poids pour 100 parties d'élastomères (pce), est indiquée dans le tableau I ci-dessous :

Tableau I

| Composition | Témoin 1 | Composition 1 |
|---|---|---|
| SBR (1) | 70 | 70 |
| BR (1) | 30 | 30 |
| Silice C1 (2) | 75 | |
| Silice S1 (3) | | 75 |
| Agent de couplage (4) | 6,6 | 6,6 |
| Plastifiant (5) | 20 | 20 |
| Noir de carbone (N330) | 5,0 | 5,0 |
| ZnO | 2,5 | 2,5 |
| Acide stéarique | 2,0 | 2,0 |
| Antioxydant (6) | 1,9 | 1,9 |
| DPG (7) | 2,0 | 2,0 |

(suite)

| Composition | Témoin 1 | Composition 1 |
|---|---|---|
| CBS (8) | 1,7 | 1,7 |
| Soufre | 1,5 | 1,5 |

(1) S-SBR (HPR355 de la société JSR) fonctionnalisé avec 57 % de motifs vinyl ; 27 % de motifs styrène ; Tg voisin de -27°C / BR (Buna CB 25 de la société Lanxess) (2) Silice C1 (délitage avec addition simultanée d'aluminate de sodium et d'acide sulfurique (exemple 3 - comparatif)) (3) Silice S1 selon la présente invention (délitage avec addition d'un mélange d'acides MGA (exemple 2 ci-dessus)) (4) Bis-triéthoxysilylpropyldisulfidosilane (JH-S75 TESPD de la société Castle Chemicals) (5) Huile plastifiante de type TDAE (Vivatec 500 de la société Hansen & Rosenthal KG) (6) N-1,3-diméthylbutyl-N-phényl-para-phénylènediamine (Santoflex 6-PPD de la société Flexsys) (7) Diphénylguanidine (Rhénogran DPG-80 de la société RheinChemie) (8) N-cyclohexyl-2-benzothiazyl-sulfénamide (Rhénogran CBS-80 de la société RheinChemie)

Procédé de préparation des compositions élastomériques :
Le procédé de préparation des compositions de caoutchouc est conduit en deux phases de préparation successives. Une première phase consiste dans une phase de travail thermomécanique à haute température. Elle est suivie d'une seconde phase de travail mécanique à des températures inférieures à 110°C. Cette phase permet l'introduction du système de vulcanisation.

La première phase est réalisée au moyen d'un appareil de mélangeage, type mélangeur interne de marque Brabender (capacité de 380 ml). Le coefficient de remplissage est de 0,6. La température initiale et la vitesse des rotors sont fixées à chaque fois de manière à atteindre des températures de tombée de mélange voisines de 115-170°C.

Décomposée ici en deux passes, la première phase permet d'incorporer dans une première passe, les élastomères puis la charge renforçante (introduction fractionnée) avec l'agent de couplage et l'acide stéarique. Pour cette passe, la durée est comprise entre 4 et 10 minutes.

Après refroidissement du mélange (température inférieure à 100°C), une seconde passe permet d'incorporer l'oxyde de zinc et les agents protecteurs/antioxydants (6-PPD notamment). La durée de cette passe est comprise entre 2 et 5 minutes.

Après refroidissement du mélange (température inférieure à 100°C), la seconde phase permet l'introduction du système de vulcanisation (soufre et accélérateurs, comme le CBS). Elle est réalisée sur un mélangeur à cylindres, préchauffé à 50°C. La durée de cette phase est comprise entre 2 et 6 minutes.

Chaque mélange final est ensuite calandré sous la forme de plaques d'épaisseur 2-3 mm.

Sur ces mélanges obtenus dits crus, une évaluation de leurs propriétés rhéologiques permet d'optimiser la durée et la température de vulcanisation.

Ensuite, les propriétés mécaniques et dynamiques des mélanges vulcanisés à l'optimum de cuisson (T98) sont mesurées.

Propriétés rhéologiques

- Viscosité des mélanges crus :
La consistance Mooney est mesurée sur les compositions à l'état cru à 100°C au moyen d'un rhéomètre MV 2000 ainsi que la détermination du taux de relaxation de contrainte Mooney selon la norme NF ISO 289.

La valeur du couple lue au bout de 4 minutes après un préchauffage d'une minute (Mooney Large (1+4) - à 100°C) est indiquée dans le tableau II. Le test est réalisé après confection des mélanges crus puis après un vieillissement durant 3 semaines à une température de 23 +/- 3°C.

Tableau II

| Références | | Témoin 1 | Composition 1 |
|---|---|---|---|
| ML (1+4) - 100°C | Initial | 166 | 136 |
| Relaxation Mooney | Initial | 0,204 | 0,229 |

(suite)

| Références | | Témoin 1 | Composition 1 |
|---|---|---|---|
| ML (1+4) - 100°C | Après 17 jours (23 +/- 3°C) | 182 | 154 |
| Relaxation Mooney | Après 17 jours (23 +/- 3°C) | 0,175 | 0,206 |
| ML (1+4) - 100°C | Après 21 jours (23 +/- 3°C) | 183 | 155 |
| Relaxation Mooney | Après 21 jours (23 +/- 3°C) | 0,183 | 0,201 |

On constate que la silice S1 de la présente invention (Composition 1) permet une réduction conséquente de la viscosité à cru initiale, par rapport à la valeur du mélange avec la référence (Témoin 1).

On constate également que la silice S1 de la présente invention (Composition 1) permet de conserver l'avantage en viscosité à cru réduite, par rapport à la valeur du mélange avec la référence (Témoin 1), après 3 semaines de stockage.

Ce type de comportement dans le temps est très utile pour l'homme de l'art dans le cas de la mise en œuvre de mélanges caoutchouc contenant de la silice.

- Rhéométrie des compositions :
  Les mesures sont réalisées sur les compositions à l'état cru. On a porté dans le tableau III les résultats concernant le test de rhéologie qui est conduit à 160°C au moyen d'un rhéomètre ODR MONSANTO selon la norme NF ISO 3417.

Selon ce test, la composition à tester est placée dans la chambre d'essai régulée à la température de 160°C durant 30 minutes, et on mesure le couple résistant, opposé par la composition, à une oscillation de faible amplitude (3°) d'un rotor biconique inclus dans la chambre d'essai, la composition remplissant complètement la chambre considérée.

A partir de la courbe de variation du couple en fonction du temps, on détermine :

- le couple minimum (Cmin) qui reflète la viscosité de la composition à la température considérée ;
- le couple maximum (Cmax) ;
- le delta-couple ($\Delta C$ = Cmax - Cmin) qui reflète le taux de réticulation entraîné par l'action du système de réticulation et, s'il y a lieu, des agents de couplage ;
- le temps T98 nécessaire pour obtenir un état de vulcanisation correspondant à 98 % de la vulcanisation complète (ce temps est pris comme optimum de vulcanisation) ;
- et le temps de grillage TS2 correspondant au temps nécessaire pour avoir une remontée de 2 points au-dessus du couple minimum à la température considérée (160°C) et qui reflète le temps pendant lequel il est possible de mettre en œuvre les mélanges crus à cette température sans avoir d'initiation de la vulcanisation (le mélange durcit à partir de TS2).

Les résultats obtenus sont indiqués dans le tableau III.

Tableau III

| Compositions | Témoin 1 | Composition 1 |
|---|---|---|
| Cmin (dN.m) | 32,6 | 28,1 |
| Cmax (dN.m) | 73,9 | 69,3 |
| Delta couple (dN.m) | 41,3 | 41,2 |
| TS2 (min) | 3,1 | 4,6 |
| T98 (min) | 27,1 | 27,2 |

L'utilisation de la silice S1 de la présente invention (Composition 1) permet de réduire la viscosité minimale (signe d'une amélioration de la viscosité à cru) par rapport au mélange témoin (Témoin 1) sans pénaliser le comportement en vulcanisation.

On constate également que l'utilisation de la silice S1 de la présente invention (Composition 1) permet l'amélioration du temps de grillage TS2 par rapport au mélange témoin (Témoin 1) sans pénaliser le temps T98.

Propriétés mécaniques des vulcanisats :

Les mesures sont réalisées sur les compositions vulcanisées à l'optimum (T98) pour une température de 160°C.

Les essais de traction uni-axiale sont réalisés conformément aux indications de la norme NF ISO 37 avec des éprouvettes de type H2 à une vitesse de 500 mm/min sur un appareil INSTRON 5564. Les modules x %, correspondant à la contrainte mesurée à x % de déformation en traction, et la résistance à la rupture sont exprimés en MPa ; l'allongement à la rupture est exprimé en %. Il est possible de déterminer un indice de renforcement (I.R.) qui est égal au rapport entre le module à 300 % de déformation et le module à 100% de déformation.

La mesure de dureté Shore A des vulcanisats est réalisée selon les indications de la norme ASTM D 2240. La valeur donnée est mesurée à 15 secondes.

Les propriétés mesurées sont rassemblées dans le tableau IV.

Tableau IV

| Compositions | Témoin 1 | Composition 1 |
|---|---|---|
| Module 10 % (Mpa) | 0,91 | 0,93 |
| Module 100 % (Mpa) | 3,1 | 3,1 |
| Module 300 % (Mpa) | 12,2 | 11,9 |
| Résistance rupture (MPa) | 16,1 | 16,7 |
| Allongement à la rupture (%) | 373 | 387 |
| I.R. | 3,9 | 3,8 |
| Dureté Shore A-15s (pts) | 73 | 70 |

L'utilisation d'une silice S1 de la présente invention (Composition 1) permet d'obtenir un niveau de renforcement satisfaisant par rapport au mélange témoin (Témoin 1) et en particulier de conserver un niveau important du module 300 % de déformation.

Propriétés dynamiques des vulcanisats :

Les propriétés dynamiques sont mesurées sur un viscoanalyseur (Metravib VA3000), selon la norme ASTM D5992.

Les valeurs de facteur de perte (tan $\delta$) et de module complexe en compression dynamique (E*) sont enregistrées sur des échantillons vulcanisés (éprouvette cylindrique de section 95 mm$^2$ et de hauteur 14 mm). L'échantillon est soumis au départ à une pré-déformation de 10 % puis à une déformation sinusoïdale en compression alternée de +/- 2%. Les mesures sont réalisées à 60°C et à une fréquence de 10 Hz.

Les résultats, présentés dans le tableau V, sont ainsi le module complexe en compression (E* - 60°C - 10 Hz) et le facteur de perte (tan $\delta$ - 60°C - 10 Hz).

Tableau V

| Compositions | Témoin 1 | Composition 1 |
|---|---|---|
| E* - 60°C - 10 Hz (MPa) | 13,6 | 13,3 |
| Tan $\delta$ - 60°C - 10 Hz | 0,164 | 0,160 |

L'utilisation d'une silice S1 de la présente invention (Composition 1) permet de maintenir les propriétés dynamiques au niveau de celle du mélange témoin (Témoin 1).

L'examen des différents tableaux II à V montre que la composition conforme à l'invention (Composition 1) permet d'obtenir un bon compromis mise en œuvre / renforcement / propriétés hystérétiques par rapport à la composition témoin (Témoin 1) et notamment un gain conséquent en viscosité à cru qui reste stable au stockage dans le temps.

EXEMPLE 5

Dans un réacteur de 2500 litres, on introduit 955 litres d'eau industrielle. Cette solution est portée à 90 °C par chauffage par injection directe de vapeur. Sous agitation (95 tr/min), 15 kg de sulfate de sodium solide sont introduits dans le réacteur. Puis, on ajoute de l'acide sulfurique, présentant une concentration massique de 7,7 % et une densité de 1050 g/l, jusqu'à ce que le pH atteigne une valeur de 3,6.

On introduit simultanément dans le réacteur pendant 35 minutes une solution de silicate de sodium (de rapport pondéral SiO$_2$/Na$_2$O égal à 3,52 et de densité égale à 1,237 kg/l) à un débit de 190 l/h et de l'acide sulfurique (présentant une concentration massique de 7,7 % et une densité de 1050 g/l), à un débit régulé de manière à maintenir le pH du milieu réactionnel à une valeur de 3,6.

Au terme des 35 minutes d'addition simultanée, l'introduction d'acide est arrêtée tant que le pH n'a pas atteint une valeur égale à 8. Une nouvelle addition simultanée est ensuite réalisée pendant 40 minutes avec un débit de silicate de sodium de 190 l/h (même silicate de sodium que pour la première addition simultanée) et un débit d'acide sulfurique (présentant une concentration massique de 7,7 % et une densité de 1050 g/l) régulé de manière à maintenir le pH du milieu réactionnel à une valeur de 8.

A l'issue de cette addition simultanée, le milieu réactionnel est amené à un pH de 5,6 par l'introduction de l'acide sulfurique (présentant une concentration massique de 7,7 % et une densité de 1050 g/l. On obtient 2090 litres de bouillie à l'issue de cette réaction.

La bouille est filtrée et lavée sous filtre presse et on obtient un gâteau de silice précipitée ayant un extrait sec de 20 %.

EXEMPLE 6

Une partie du gâteau de silice obtenu à l'exemple 5 est ensuite soumis à une étape de délitage.

Lors de l'opération de délitage, on utilise une solution d'un mélange MGA à 34 % massique (mélange d'acides polycarboxyliques : 94,8 % en poids d'acide méthylglutarique, 4,9 % en poids d'anhydride éthylsuccinique, 0,2 % en poids d'acide adipique, 0,1 % autres).

On fait subir au gâteau obtenu à l'étape de filtration une opération de délitage dans un réacteur fortement agité continu avec ajout au gâteau de 15,83 grammes de la solution de MGA (rapport pondéral mélange MGA / $SiO_2$ de 1,0 %).

Ce gâteau délité (ayant un extrait sec de 20 % en poids) est ensuite séché au moyen d'un atomiseur à buses bi-fluide en pulvérisant le gâteau délité au travers d'une buse SU5 (Spraying System) de 2,54 mm avec une pression de 1 bar sous les conditions moyennes de débit et de températures suivantes :

Température d'entrée moyenne : 250 °C
Température de sortie moyenne : 140 °C
Débit moyen : 8,9 l/h.

Les caractéristiques de la silice S2 obtenue (sous forme de billes sensiblement sphériques) sont alors les suivantes :

| | |
|---|---|
| BET ($m^2$/g) | 256 |
| Teneur en acide polycarboxylique + carboxylate (C) (%) | 0,40 |
| Teneur en aluminium (Al) (%) | 0,06 |
| CTAB ($m^2$/g) | 251 |
| $\gamma_s^d$ (mJ/$m^2$) | 39,0 |
| Largeur Ld (XDC) | 1,15 |
| $V_{(d5-d50)}/V_{(d5-d100)}$ | 0,70 |
| Largeur de distribution poreuse ldp | 0,88 |
| Largeur L'd (XDC) | 1,12 |
| Reprise en eau (%) | 8,5 |
| $\emptyset_{50M}$ ($\mu$m) après désagglomération aux ultra-sons | 4,8 |
| $F_{DM}$ après désagglomération aux ultra-sons | 13,3 |
| pH | 4,2 |

EXEMPLE 7 (Comparatif)

Une partie du gâteau de silice obtenu à l'exemple 5 est ensuite soumis à une étape de délitage.

On fait subir au gâteau obtenu à l'étape de filtration une opération de délitage dans un réacteur fortement agité continu avec ajout simultané au gâteau de 15,32 grammes d'une solution d'aluminate de sodium (rapport pondéral Al/$SiO_2$ de 0,3 %) et de 37,9 grammes d'une solution d'acide sulfurique à 7,7 % massique.

Ce gâteau délité (ayant un extrait sec de 20 % en poids) est ensuite séché au moyen d'un atomiseur à buses bi-fluide en pulvérisant le gâteau délité au travers d'une buse SU5 (Spraying System) de 2,54 mm avec une pression de 1 bar sous les conditions moyennes de débit et de températures suivantes :

Température d'entrée moyenne : 250 °C
Température de sortie moyenne : 140 °C
Débit moyen : 9,8 l/h.

Les caractéristiques de la silice C2 obtenue (sous forme de billes sensiblement sphériques) sont alors les suivantes :

| | |
|---|---|
| BET (m$^2$/g) | 254 |
| Teneur en acide polycarboxylique + carboxylate (C) (%) | - |
| Teneur en aluminium (Al) (%) | 0,42 |
| CTAB (m$^2$/g) | 250 |
| $\gamma_s^d$ (mJ/m$^2$) | 65,9 |
| Largeur Ld (XDC) | 1,23 |
| $V_{(d5-d50)}/V_{(d5-d100)}$ | 0,68 |
| Largeur de distribution poreuse ldp | 0,70 |
| Largeur L'd (XDC) | 1,08 |
| Reprise en eau (%) | 9,3 |
| $\emptyset_{50M}$ ($\mu$m) après désagglomération aux ultra-sons | 6,7 |
| $F_{DM}$ après désagglomération aux ultra-sons | 14,4 |
| pH | 6,2 |

EXEMPLE 8

Dans un mélangeur interne de type Brabender (380 ml), on prépare les compositions élastomériques dont la constitution, exprimée en partie en poids pour 100 parties d'élastomères (pce), est indiquée dans le tableau I ci-dessous :

Tableau VI

| Composition | Témoin 2 | Composition 2 |
|---|---|---|
| SBR (1) | 103 | 103 |
| BR (1) | 25 | 25 |
| Silice C2 (2) | 80 | |
| Silice S2 (3) | | 80 |
| Agent de couplage (4) | 10 | 10 |
| Plastifiant (5) | 12 | 12 |
| Noir de carbone (N234) | 3 | 3 |
| ZnO | 2,5 | 2,5 |
| Acide stéarique | 2 | 2 |
| Antioxydant (6) | 1,2 | 1,2 |
| DPG (7) | 2,5 | 2,5 |
| CBS (8) | 2,3 | 2,3 |

(suite)

| Composition | Témoin 2 | Composition 2 |
|---|---|---|
| Soufre | 1,6 | 1,6 |

(1) SBR solution (Buna VSL4526-2 de la société Lanxess) avec 44,5+/-4 % de motifs vinyl ; 26+/-2 % de motifs styrène ; Tg voisin de -30°C ; 100 phr de SBR étendu avec 37,5+/-2,8 % en poids d'huile / BR (Buna CB 25 de la société Lanxess) (2) Silice C2 (délitage avec addition simultanée d'aluminate de sodium et d'acide sulfurique (exemple 7 - comparatif)) (3) Silice S2 selon la présente invention (délitage avec addition simultanée d'aluminate de sodium et d'un mélange d'acides MGA (exemple 6 ci-dessus)) (4) Bis-triéthoxysilylpropyldisulfidosilane (HP 1589 TESPD de la société HungPai) (5) Huile plastifiante de type TDAE (Vivatec 500 de la société Hansen & Rosenthal KG) (6) N-1,3-diméthylbutyl-N-phényl-para-phénylènediamine (Santoflex 6-PPD de la société Flexsys) (7) Diphénylguanidine (Rhénogran DPG-80 de la société RheinChemie) (8) N-cyclohexyl-2-benzothiazyl-sulfénamide (Rhénogran CBS-80 de la société RheinChemie)

Procédé de préparation des compositions élastomériques :
Le procédé de préparation des compositions de caoutchouc est conduit en deux phases de préparation successives en suivant la même procédure que pour l'exemple 4.

Sur ces mélanges obtenus dits crus, une évaluation de leurs propriétés rhéologiques permet d'optimiser la durée et la température de vulcanisation.

Ensuite, les propriétés mécaniques et dynamiques des mélanges vulcanisés à l'optimum de cuisson (T98) sont mesurées.

Propriétés rhéologiques

[0265]   - Viscosité des mélanges crus :
La consistance Mooney est mesurée sur les compositions à l'état cru à 100°C au moyen d'un rhéomètre MV 2000 ainsi que la détermination du taux de relaxation de contrainte Mooney selon la norme NF ISO 289.

La valeur du couple lue au bout de 4 minutes après un préchauffage d'une minute (Mooney Large (1+4) - à 100°C) est indiquée dans le tableau VII. Le test est réalisé après confection des mélanges crus puis après un vieillissement durant 2 semaines, puis 28 jours à une température de 23 +/- 3°C.

Tableau VII

| Références | | Témoin 2 | Composition 2 |
|---|---|---|---|
| ML (1+4) - 100°C | Initial | 129 | 100 |
| Relaxation Mooney | Initial | 0,176 | 0,228 |
| ML (1+4) - 100°C | Après 14 jours (23 +/- 3°C) | 144 | 122 |
| Relaxation Mooney | Après 14 jours (23 +/- 3°C) | 0,155 | 0,198 |
| ML (1+4) - 100°C | Après 28 jours (23 +/- 3°C) | 151 | 130 |
| Relaxation Mooney | Après 28 jours (23 +/- 3°C) | 0,145 | 0,178 |

On constate que la silice S2 de la présente invention (Composition 2) permet une réduction conséquente de la viscosité à cru initiale, par rapport à la valeur du mélange avec la référence (Témoin 2).

On constate également que la silice S2 de la présente invention (Composition 2) permet de conserver l'avantage en viscosité à cru réduite, par rapport à la valeur du mélange avec la référence (Témoin 2), après 28 jours de stockage.

Ce type de comportement dans le temps est très utile pour l'homme de l'art dans le cas de la mise en œuvre de mélanges caoutchouc contenant de la silice.

-   Rhéométrie des compositions :
Les mesures sont réalisées sur les compositions à l'état cru. On a porté dans le tableau VIII les résultats concernant le test de rhéologie qui est conduit à 160°C au moyen d'un rhéomètre ODR MONSANTO selon la norme NF ISO 3417 et telle que décrite à l'exemple 4.

Les résultats obtenus sont indiqués dans le tableau VIII.

Tableau VIII

| Compositions | Témoin 2 | Composition 2 |
|---|---|---|
| Cmin (dN.m) | 36,3 | 27,7 |
| Cmax (dN.m) | 76,5 | 71,1 |
| Delta couple (dN.m) | 40,1 | 43,4 |
| TS2 (min) | 3,2 | 5,5 |
| T98 (min) | 27,0 | 26,0 |

L'utilisation de la silice S2 de la présente invention (Composition 2) permet de réduire la viscosité minimale (signe d'une amélioration de la viscosité à cru) par rapport au mélange témoin (Témoin 2) sans pénaliser le comportement en vulcanisation.

On constate également que l'utilisation de la silice S2 de la présente invention (Composition 2) permet l'amélioration du temps de grillage TS2 par rapport au mélange témoin (Témoin 2) sans pénaliser le temps T98.

Propriétés mécaniques des vulcanisats :

Les mesures sont réalisées sur les compositions vulcanisées à l'optimum (T98) pour une température de 160°C.

Les essais de traction uni-axiale sont réalisés conformément aux indications de la norme NF ISO 37 avec des éprouvettes de type H2 à une vitesse de 500 mm/min sur un appareil INSTRON 5564. Les modules x %, correspondant à la contrainte mesurée à x % de déformation en traction, et la résistance à la rupture sont exprimés en MPa ; l'allongement à la rupture est exprimé en %. Il est possible de déterminer un indice de renforcement (I.R.) qui est égal au rapport entre le module à 300 % de déformation et le module à 100% de déformation.

La mesure de dureté Shore A des vulcanisats est réalisée selon les indications de la norme ASTM D 2240. La valeur donnée est mesurée à 15 secondes.

Les propriétés mesurées sont rassemblées dans le tableau IX.

Tableau IX

| Compositions | Témoin 2 | Composition 2 |
|---|---|---|
| Module 10 % (Mpa) | 0,9 | 0,8 |
| Module 100 % (Mpa) | 2,6 | 2,4 |
| Module 300 % (Mpa) | 9,9 | 9,7 |
| Résistance rupture (MPa) | 16,9 | 18,5 |
| Allongement à la rupture (%) | 450 | 479 |
| I.R. | 3,8 | 4,0 |
| Dureté Shore A-15s (pts) | 72 | 70 |

L'utilisation de la silice S2 de la présente invention (Composition 2) permet d'obtenir un niveau de renforcement satisfaisant par rapport au mélange témoin (Témoin 2) et en particulier de conserver un niveau important du module 300 % de déformation et de propriétés ultimes (résistance rupture et allongement).

La composition 2 présente ainsi des modules 10 % et 100 % relativement faibles et un module 300 % relativement élevé, d'où un bon indice de renforcement.

Propriétés dynamiques des vulcanisats :

Les propriétés dynamiques sont mesurées sur un viscoanalyseur (Metravib VA3000), selon la norme ASTM D5992.

Les valeurs de facteur de perte (tan $\delta$) et de module élastique en cisaillement dynamique ($G^*_{12\%}$) sont enregistrées sur des échantillons vulcanisés (éprouvette parallélépipédique de section 8 mm$^2$ et de hauteur 7 mm). L'échantillon est soumis à une déformation sinusoïdale en double cisaillement alterné à une température de 40°C et à une fréquence de 10 Hz. Les processus de balayage en amplitude de déformations s'effectuent selon un cycle aller-retour, allant de 0,1 % à 50 % puis retour de 50 % à 0,1 %.

Les résultats, présentés dans le tableau X, sont issus du balayage en amplitude de déformations au retour et concernent la valeur maximale du facteur de perte (tan $\delta$ max retour- 40°C - 10 Hz) ainsi que la module élastique $G^*_{12\%}$.

Tableau X

| Compositions | Témoin 2 | Composition 2 |
|---|---|---|
| $G^*_{12\%}$ - 40°C - 10 Hz (MPa) | 2,0 | 1,8 |
| Tan $\delta$ max retour - 40°C - 10 Hz | 0,282 | 0,286 |

L'utilisation de la silice S2 de la présente invention (Composition 2) permet de maintenir les propriétés dynamiques au niveau de celle du mélange témoin (Témoin 2).

L'examen des différents tableaux VII à X montre que la composition conforme à l'invention (Composition 2) permet d'améliorer le compromis mise en œuvre / renforcement / propriétés hystérétiques à 40°C par rapport à la composition témoin (Témoin 2) et notamment un gain conséquent en viscosité à cru qui reste stable au stockage dans le temps.

**Revendications**

1. Silice précipitée, **caractérisée en ce qu'**elle possède :

   - une surface spécifique BET comprise entre 45 et 550 m2/g, notamment entre 70 et 370 m2/g, en particulier entre 80 et 350 m2/g,
   - une surface spécifique CTAB comprise entre 40 et 525 m2/g, notamment entre 70 et 350 m2/g, en particulier entre 80 et 310 m2/g,
   - une teneur (C) en acide polycarboxylique + carboxylate correspondant, exprimée en carbone total, d'au moins 0,15 % en poids, notamment d'au moins 0,20 % en poids,
   - une largeur Ld ((d84 - d16)/d50) de distribution de taille d'objets mesurée par granulométrie XDC après désagglomération aux ultra-sons d'au moins 0,91 et une répartition du volume poreux telle que le rapport $V_{(d5 - d50)}/V_{(d5 - d100)}$ est d'au moins 0,65, notamment d'au moins 0,66.

2. Silice précipitée selon la revendication 1, **caractérisée en ce qu'**elle possède une surface spécifique BET comprise entre 100 et 320 m2/g, en particulier entre 120 et 300 m2/g.

3. Silice précipitée selon l'une des revendications 1 ou 2, **caractérisée en ce qu'**elle possède une surface spécifique CTAB comprise entre 100 et 300 m2/g, en particulier entre 120 et 280 m2/g.

4. Silice précipitée selon l'une des revendications 1 à 3, **caractérisée en ce qu'**elle présente une teneur (C) en acide polycarboxylique + carboxylate correspondant, exprimée en carbone total, d'au moins 0,24 % en poids, en particulier d'au moins 0,30 % en poids.

5. Silice précipitée selon l'une des revendications 1 à 4, **caractérisée en ce qu'**elle présente une composante dispersive de l'énergie de surface $\gamma_s^d$ inférieure à 52 mJ/m2, notamment inférieure à 50 mJ/m2, en particulier d'au plus 45 mJ/m2, par exemple inférieure à 40 mJ/m2.

6. Procédé de préparation d'une silice précipitée du type comprenant la réaction de précipitation entre un silicate et un agent acidifiant ce par quoi l'on obtient une suspension de silice précipitée, **caractérisé en ce qu'**il comprend les étapes suivantes :

   - on réalise la réaction de précipitation de la manière suivante :

      (i) on forme un pied de cuve aqueux présentant un pH compris entre 2,0 et 5,0, de préférence entre 2,5 et 5,0,
      (ii) on ajoute audit pied de cuve, simultanément, du silicate et de l'agent acidifiant, de telle manière que le pH du milieu réactionnel soit maintenu entre 2,0 et 5,0,
      (iii) on arrête l'addition de l'agent acidifiant tout en continuant l'addition de silicate dans le milieu réactionnel jusqu'à l'obtention d'une valeur du pH du milieu réactionnel comprise entre 7,0 et 10,0,
      (iv) on ajoute au milieu réactionnel, simultanément, du silicate et de l'agent acidifiant, de telle manière que le pH du milieu réactionnel soit maintenu entre 7,0 et 10,0,
      (V) on arrête l'addition du silicate tout en continuant l'addition de l'agent acidifiant dans le milieu réactionnel jusqu'à l'obtention d'une valeur du pH du milieu réactionnel inférieure à 6,0,

- on filtre la suspension de silice obtenue,
- on soumet le gâteau de filtration obtenu à l'issue de la filtration à une opération de délitage,

ledit procédé étant **caractérisé en ce qu'**on ajoute au gâteau de filtration, soit au cours de l'opération de délitage, soit après l'opération de délitage et avant l'étape de séchage, au moins un acide polycarboxylique.

7.  Procédé selon la revendication 6, dans lequel, au cours de l'opération de délitage, au moins un acide polycarboxylique est ajouté au gâteau de filtration.

8.  Procédé selon la revendication 6, dans lequel au moins un acide polycarboxylique est ajouté au gâteau de filtration après l'opération de délitage.

9.  Procédé selon l'une des revendications 6 à 8, dans lequel ledit acide polycarboxylique est choisi parmi les acides polycarboxyliques linéaires ou ramifiés, saturés ou insaturés, aliphatiques ayant de 2 à 20 atomes de carbone ou aromatiques.

10. Procédé selon la revendication 9, dans lequel ledit acide polycarboxylique est choisi parmi l'acide adipique, l'acide succinique, l'acide éthylsuccinique, l'acide glutarique, l'acide méthylglutarique, l'acide oxalique, l'acide citrique.

11. Procédé selon l'une des revendications 6 à 10, dans lequel on ajoute un mélange d'acides polycarboxyliques au gâteau de filtration.

12. Procédé selon la revendication 11, dans lequel le mélange d'acides polycarboxyliques comprend les acides suivants : acide méthylglutarique, acide éthylsuccinique et acide adipique.

13. Utilisation comme charge renforçante pour polymères, notamment pour pneumatiques, d'une silice précipitée selon l'une des revendications 1 à 5 ou obtenue par le procédé selon l'une des revendications 6 à 12.

14. Composition de polymères comprenant une silice précipitée selon l'une des revendications 1 à 5 ou obtenue par le procédé selon l'une des revendications 6 à 12.

15. Article comprenant au moins une composition selon la revendication 14, cet article consistant en une semelle de chaussures, un revêtement de sols, une barrière aux gaz, un matériau ignifugeant, un galet de téléphérique, un joint d'appareils électroménagers, un joint de conduites de liquides ou de gaz, un joint de système de freinage, un tuyau, une gaine, un câble, un support de moteur, un séparateur de batterie, une bande de convoyeur, une courroie de transmissions, ou, de préférence, un pneumatique.

**Patentansprüche**

1.  Fällungskieselsäure, **dadurch gekennzeichnet, dass** sie

    - eine spezifische BET-Oberfläche zwischen 45 und 550 $m^2$/g, insbesondere zwischen 70 und 370 $m^2$/g, speziell zwischen 80 und 350 $m^2$/g,
    - eine spezifische CTAB-Oberfläche zwischen 40 und 525 $m^2$/g, insbesondere zwischen 70 und 350 $m^2$/g, speziell zwischen 80 und 310 $m^2$/g,
    - einen Gehalt (C) an Polycarbonsäure + entsprechendem Carboxylat, ausgedrückt als Gesamtkohlenstoff, von mindestens 0,15 Gew.-%, insbesondere mindestens 0,20 Gew.-%,
    - eine durch XDC-Teilchengrößenbestimmung nach Ultraschall-Desagglomerierung bestimmte Objektgrößenverteilungsbreite Ld ((d84-d16)/d50) von mindestens 0,91 und eine solche Porenvolumenverteilung, dass das Verhältnis $V_{(d5-d50)}/V_{(d5-d100)}$ mindestens 0,65, insbesondere mindestens 0,66, beträgt,

    aufweist.

2.  Fällungskieselsäure, **dadurch gekennzeichnet, dass** sie eine spezifische BET-Oberfläche zwischen 100 und 320 $m^2$/g, speziell zwischen 120 und 300 $m^2$/g, aufweist.

3. Fällungskieselsäure nach Anspruch 1 oder 2, **dadurch gekennzeichnet, dass** sie eine spezifische CTAB-Oberfläche zwischen 100 und 300 $m^2$/g, speziell zwischen 120 und 280 $m^2$/g, aufweist.

4. Fällungskieselsäure nach einem der Ansprüche 1 bis 3, **dadurch gekennzeichnet, dass** sie einen Gehalt (C) an Polycarbonsäure + entsprechendem Carboxylat, ausgedrückt als Gesamtkohlenstoff, von mindestens 0,24 Gew.-%, speziell mindestens 0,30 Gew.-%, aufweist.

5. Fällungskieselsäure nach einem der Ansprüche 1 bis 4, **dadurch gekennzeichnet, dass** sie eine dispersive Komponente der Oberflächenenergie $\gamma_s^d$ von weniger als 52 mJ/$m^2$, insbesondere weniger als 50 mJ/$m^2$, speziell von höchstens 45 mJ/$m^2$, beispielsweise von weniger als 40 mJ/$m^2$, aufweist.

6. Verfahren zur Herstellung einer Fällungskieselsäure des Typs, der die Fällungsreaktion zwischen einem Silikat und einem Ansäuerungsmittel, wodurch man eine Suspension von Kieselsäure erhält, umfasst, **dadurch gekennzeichnet, dass** es die folgenden Schritte umfasst:

   - man führt die Fällungsreaktion folgendermaßen durch:

      (i) man bildet eine anfängliche wässrige Vorlage, die einen pH-Wert zwischen 2,0 und 5,0, vorzugsweise zwischen 2,5 und 5,0, aufweist,
      (ii) man gibt Silikat und Ansäuerungsmittel der Art gleichzeitig zu der Vorlage, dass der pH-Wert des Reaktionsmediums zwischen 2,0 und 5,0 gehalten wird,
      (iii) man hört mit der Zugabe des Ansäuerungsmittels auf und fährt gleichzeitig mit der Zugabe des Silikats zum Reaktionsmedium fort, bis man einen pH-Wert des Reaktionsmediums zwischen 7,0 und 10,0 erhält,
      (iv) man gibt Silikat und Ansäuerungsmittel derart gleichzeitig zum Reaktionsmedium, dass der pH-Wert des Reaktionsmediums zwischen 7,0 und 10,0 gehalten wird,
      (v) man hört mit der Zugabe des Silikats auf und fährt gleichzeitig mit der Zugabe des Ansäuerungsmittels zum Reaktionsmedium fort, bis man einen pH-Wert des Reaktionsmediums von weniger als 6,0 erhält,

   - man filtriert die erhaltene Kieselsäuresuspension,
   - man unterwirft den am Ende der Filtration erhaltenen Filterkuchen einem Aufbrechvorgang, wobei das Verfahren **dadurch gekennzeichnet ist, dass** man entweder während des Aufbrechvorgangs oder nach dem Aufbrechvorgang und vor dem Trocknungsschritt mindestens eine Polycarbonsäure zu dem Filterkuchen gibt.

7. Verfahren nach Anspruch 6, bei dem während des Aufbrechvorgangs mindestens eine Polycarbonsäure zu dem Filterkuchen gegeben wird.

8. Verfahren nach Anspruch 6, bei dem nach dem Aufbrechvorgang mindestens eine Polycarbonsäure zu dem Filterkuchen gegeben wird.

9. Verfahren nach einem der Ansprüche 6 bis 8, bei dem die Polycarbonsäure aus linearen und verzweigten, gesättigten oder ungesättigten, aliphatischen Polycarbonsäuren mit 2 bis 20 Kohlenstoffatomen oder aromatischen Polycarbonsäuren ausgewählt wird.

10. Verfahren nach Anspruch 9, bei dem die Polycarbonsäure aus Adipinsäure, Bernsteinsäure, Ethylbernsteinsäure, Glutarsäure, Methylglutarsäure, Oxalsäure und Citronensäure ausgewählt wird.

11. Verfahren nach einem der Ansprüche 6 bis 10, bei dem man eine Mischung von Polycarbonsäuren zu dem Filterkuchen gibt.

12. Verfahren nach Anspruch 11, bei dem die Mischung von Polycarbonsäuren die folgenden Säuren umfasst: Methylglutarsäure, Ethylbernsteinsäure und Adipinsäure.

13. Verwendung einer Fällungskieselsäure nach einem der Ansprüche 1 bis 5 oder einer durch das Verfahren nach einem der Ansprüche 6 bis 12 erhaltenen Fällungskieselsäure als verstärkender Füllstoff für Polymere, insbesondere für Reifen.

14. Polymerzusammensetzung, umfassend eine Fällungskieselsäure nach einem der Ansprüche 1 bis 5 oder eine durch das Verfahren nach einem der Ansprüche 6 bis 12 erhaltene Fällungskieselsäure.

**15.** Artikel, umfassend mindestens eine Zusammensetzung nach Anspruch 14, wobei dieser Artikel aus einer Schuhsohle, einem Bodenbelag, einer Gasbarriere, einem Flammschutzmaterial, einer Rolle für Seilbahnen, einer Dichtung für Haushaltselektrogeräte, einer Dichtung für Flüssigkeits- oder Gasleitungen, einer Bremssystemdichtung, einem Rohr, einer Ummantelung, einem Kabel, einer Motoraufhängung, einem Batterieseparator, einem Förderband, einem Treibriemen oder vorzugsweise einem Reifen besteht.

**Claims**

**1.** Precipitated silica, **characterized in that** it has:

- a BET specific surface of between 45 and 550 $m^2/g$, in particular between 70 and 370 $m^2/g$, especially between 80 and 350 $m^2/g$,
- a CTAB specific surface of between 40 and 525 $m^2/g$, in particular between 70 and 350 $m^2/g$, especially between 80 and 310 $m^2/g$,
- a content (C) of polycarboxylic acid + corresponding carboxylate, expressed as total carbon, of at least 0.15% by weight, in particular of at least 0.20% by weight,
- a width Ld ((d84 - d16)/d50) with a size distribution of objects, measured by XDC particle size analysis after deagglomeration with ultrasound, of at least 0.91 and a distribution of the pore volume such that the ratio $V_{(d5-d50)}/V_{(d5-d100)}$ is at least 0.65, in particular at least 0.66.

**2.** Precipitated silica according to Claim 1, **characterized in that** it has a BET specific surface of between 100 and 320 $m^2/g$, especially between 120 and 300 $m^2/g$.

**3.** Precipitated silica according to either of Claims 1 and 2, **characterized in that** it has a CTAB specific surface of between 100 and 300 $m^2/g$, especially between 120 and 280 $m^2/g$.

**4.** Precipitated silica according to one of Claims 1 to 3, **characterized in that** it exhibits a content (C) of polycarboxylic acid + corresponding carboxylate, expressed as total carbon, of at least 0.24% by weight, especially of at least 0.30% by weight.

**5.** Precipitated silica according to one of Claims 1 to 4, **characterized in that** it exhibits a dispersive component of the surface energy $\gamma_s^d$ of less than 52 $mJ/m^2$, in particular of less than 50 $mJ/m^2$, especially at most of 45 $mJ/m^2$, for example less than 40 $mJ/m^2$.

**6.** Process for the preparation of a precipitated silica of the type comprising the precipitation reaction between a silicate and an acidified agent whereby a suspension of precipitated silica is obtained, **characterized in that** it comprises the following steps:

- the precipitation reaction is carried out in the following way:

(i) an aqueous vessel heel exhibiting a pH of between 2.0 and 5.0, preferably between 2.5 and 5.0, is formed,
(ii) silicate and acidifying agent are added simultaneously to said vessel heel, in such a way that the pH of the reaction medium is maintained between 2.0 and 5.0,
(iii) the addition of the acidifying agent is halted while continuing the addition of silicate to the reaction medium until a value of the pH of the reaction medium of between 7.0 and 10.0 is obtained,
(iv) silicate and acidifying agent are added simultaneously to the reaction medium, in such a way that the pH of the reaction medium is maintained between 7.0 and 10.0,
(V) the addition of the silicate is halted while continuing the addition of the acidifying agent to the reaction medium until a value of the pH of the reaction medium of less than 6.0 is obtained,

- the silica suspension obtained is filtered,
- the filtration cake obtained on conclusion of the filtration is subjected to a disintegration operation,

said process being **characterized in that** at least one polycarboxylic acid is added to the filtration cake, either during the disintegration operation or after the disintegration operation and before the drying step.

**7.** Process according to Claim 6, in which, during the disintegration operation, at least one polycarboxylic acid is added to the filtration cake.

8.  Process according to Claim 6, in which at least one polycarboxylic acid is added to the filtration cake after the disintegration operation.

9.  Process according to one of Claims 6 to 8, in which said polycarboxylic acid is chosen from saturated or unsaturated, linear or branched, aliphatic polycarboxylic acids having from 2 to 20 carbon atoms or aromatic polycarboxylic acids.

10. Process according to Claim 9, in which said polycarboxylic acid is chosen from adipic acid, succinic acid, ethylsuccinic acid, glutaric acid, methylglutaric acid, oxalic acid or citric acid.

11. Process according to one of Claims 6 to 10, in which a mixture of polycarboxylic acids is added to the filtration cake.

12. Process according to Claim 11, in which the mixture of polycarboxylic acids comprises the following acids: methylglutaric acid, ethylsuccinic acid and adipic acid.

13. Use as reinforcing filler for polymers, in particular for tyres, of a precipitated silica according to one of Claims 1 to 5 or obtained by the process according to one of Claims 6 to 12.

14. Polymer composition comprising a precipitated silica according to one of Claims 1 to 5 or obtained by the process according to one of Claims 6 to 12.

15. Article comprising at least one composition according to Claim 14, this article consisting of a footwear sole, a floor covering, a gas barrier, a flame-retardant material, a roller for cableways, a seal for domestic electrical appliances, a seal for liquid or gas pipes, a braking system seal, a pipe, a sheathing, a cable, an engine support, a battery separator, a conveyor belt, a transmission belt or, preferably, a tyre.

Figure 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2886285 A1

- WO 2013092745 A1

**Littérature non-brevet citée dans la description**

- *The Journal of the American Chemical Society,* Février 1938, vol. 60, 309

- **DORRIS ; GRAY.** *J. Colloid Interface Sci.,* vol. 77 (180), 353-362